# EUROPEAN PATENT SPECIFICATION

(11) **EP 3 527 542 B1**
(45) Date of publication and mention of the grant of the patent: **28.01.2026**
(21) Application number: 17859721.7
(22) Date of filing: 12.10.2017
(51) Int. Cl.: C03C 27/12, B32B 17/10, B32B 27/30, B60J 1/00, B60J 1/02

(54) **LAMINATED GLASS INTERMEDIATE FILM, ROLLED BODY, AND LAMINATED GLASS**
VERBUNDGLASZWISCHENFOLIE, GEWALZTER KÖRPER UND VERBUNDGLAS
FILM INTERMÉDIAIRE DE VERRE FEUILLETÉ, CORPS LAMINÉ, ET VERRE FEUILLETÉ

(30) Priority: 12.10.2016 JP 2016201029
(43) Date of publication of application: 21.08.2019
(73) Proprietor: Sekisui Chemical Co., Ltd., Osaka-shi, Osaka 530-8565 (JP)
(72) Inventor: OOTA, Yuusuke, Kouka-shi Shiga 528-8585 (JP); NOHARA, Atsushi, Kouka-shi Shiga 528-8585 (JP)
(74) Representative: Ter Meer Steinmeister & Partner
(86) International application number: PCT/JP2017/036927
(87) International publication number: WO 2018/070462

(56) References cited:
- EP-A1- 1 063 205
- EP-A1- 2 918 563
- EP-A1- 3 392 222
- JP-A- 2001 097 745
- JP-A- 2001 106 555
- JP-A- 2001 139 352
- JP-A- 2001 240 435
- JP-A- 2001 240 435
- JP-A- 2016 069 258
- JP-A- 2016 084 439
- JP-A- H07 223 849
- US-A1- 2009 293 952
- SEKISUI CHEMICAL CO., LTD.: "Wedge-shaped interlayer film for HUD", 31 December 2009 (2009-12-31), XP002798793, Retrieved from the Internet <URL:https://www.s-lecfilm.com/eng/product/auto/hud/index.html> [retrieved on 20200421]
- SEKISUI: "S-LEC Physical Properties", XP002798794, Retrieved from the Internet <URL:https://www.sekisui.co.jp/cs/eng/products/slec/datasheet/1323414_33178.html> [retrieved on 20200420]

## Description

### TECHNICAL FIELD

The present invention relates to an interlayer film for laminated glass which is used for obtaining laminated glass. Moreover, the present invention relates to a roll body and laminated glass both of which are prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

As the laminated glass used for automobiles, a head-up display (HUD) has been known. In the HUD, on the windshield of an automobile, measured information such as the speed which is traveling data of the automobile and the like can be displayed.

In the HUD, there is a problem that the measured information displayed on the windshield is doubly observed.

As laminated glass capable of suppressing double images, the following Patent Document 1 discloses a sheet of laminated glass in which a wedge-shaped interlayer film having a prescribed wedge angle is sandwiched between a pair of glass plates. In such a sheet of laminated glass, by the adjustment of the wedge angle of the interlayer film, a display of measured information reflected by one glass plate and a display of measured information reflected by the other glass plate can be focused into one point to make an image in the visual field of a driver. For that reason, the display of measured information is hard to be observed doubly and the visibility of a driver is hardly hindered. Furthermore, the following Patent Document 2 discloses an interlayer film for laminated glass, having one end and the other end being at the opposite side of the one end, wherein the thickness of the other end is larger than the thickness of the one end. This interlayer film comprises a first layer and a second layer arranged on a first surface side of the first layer, wherein the first layer contains a polyvinyl acetal resin, a plasticizer, an ultraviolet ray screening agent and an oxidation inhibitor, and wherein the second layer contains a polyvinyl acetal resin, a plasticizer, an ultraviolet ray screening agent and an oxidation inhibitor. Furthermore, the content of the hydroxyl group of the polyvinyl acetal resin in the first layer is lower than the content of the hydroxyl group of the polyvinyl acetal resin in the second layer. Patent Document 3 discloses a composition for an interlayer film, the composition comprising polyvinyl acetal, a plasticizer, and at least one of a sodium salt, a potassium salt and a magnesium salt, wherein the maximum particle size of the sodium salt or potassium salt measured by TOF-SIMS is 25 µm or more, or the maximum particle size of the magnesium salt measured by TOF-SIMS is 15 µm or more.
Patent Document 4 describes an interlayer film for laminated glass comprising a plasticized polyvinyl butyral resin with a specific butyralization degree and specified amounts of a polyoxyethylene monoalkyl ether, a polyoxypropylene monoalkyl ether and a potassium salt of a carboxylic acid having 4 to 12 carbon atoms.
Patent Document 5 is dedicated to an interlayer film comprising a first end and a second end, the first end being thinner than the second end; and a thin region and a thick region, the thin region having a moisture content higher than a moisture content of the thick region.

### Related Art Document

### Patent Document

Patent Document 1: JP H4-502525 T
Patent Document 2: EP 3 392 222 A1
Patent Document 3: JP 2016 084439 A
Patent Document 4: JP 2001 240435 A
Patent Document 5: EP 2 918 563 A1

### SUMMARY OF THE INVENTION

### PROBLEMS TO BE SOLVED BY THE INVENTION

Before laminated glass is obtained, there is a case where a wedge-shaped interlayer film is wound so that the wedge-shaped interlayer film is formed into a roll body. In the wedge-shaped interlayer film, the thickness differs between one end and the other end. Therefore, in a roll body, the wound state differs between the one end part and the other end part of the interlayer film.

The interlayer film in the form of the roll body is unwound to be used. At the time of this unwinding, the unwinding properties differ between the one end part and the other end part of the interlayer film, so that the handling property of the interlayer film can be low. For example, deviation or meandering can occur during unwinding. As a result, the surface condition of the unwound interlayer film can be impaired, or the unwound interlayer film can wrinkle, which can result in poor appearance of the laminated glass to be obtained.

In both cases of the wedge-shaped interlayer film that is made into a roll body, and the wedge-shaped interlayer film that is not made into a roll body, the pasting characteristics for laminated glass can differ between the one end and the other end and the handling property of the interlayer film can be poor in preparing laminated glass by using the wedge-shaped interlayer film. Therefore, the contact condition between the interlayer film and the glass plate can partly differ, or the interlayer film can wrinkle, which can result in poor appearance of the laminated glass to be obtained.

A wedge-shaped interlayer film, as compared with an interlayer film having uniform thickness, tends to be poor in handling property, and easily causes poor appearance of the laminated glass to be obtained.

An object of the present invention is to provide an interlayer film for laminated glass capable of enhancing the handling property of the interlayer film, and suppressing poor appearance of the laminated glass. Moreover, the present invention is also aimed at providing a roll body and laminated glass both of which are prepared with the interlayer film for laminated glass.

### MEANS FOR SOLVING THE PROBLEMS

According to a broad aspect of the present invention, there is provided an interlayer film for laminated glass (hereinafter, also abbreviated as "interlayer film" in the present specification) that is an interlayer film used for laminated glass, containing a thermoplastic resin, the interlayer film having one end and other end on an opposite side of the one end, the other end having a thickness larger than a thickness of the one end, a surface resistivity at the one end of the interlayer film after standing being 9.5 × 10¹³Ω or less when the interlayer film has been left to stand for 7 days at 10°C and relative humidity of 50%, a surface resistivity at the other end of the interlayer film after standing being smaller than the surface resistivity at the one end of the interlayer film after standing, the surface resistivity being measured according to the method as described herein in accordance with JIS 6911:1995, wherein the interlayer film has a one-layer structure or a two or more-layer structure, and when the interlayer film has a one-layer structure composed only of a first layer, the first layer comprises an antistatic agent, and when the interlayer film has a two or more-layer structure, the surface layers comprise an antistatic agent, and wherein the antistatic agent consists of polyoxyethylene monoalkyl ether, wherein the content of the antistatic agent is 0.05 wt.-% or more and 0.8 wt.-% or less in 100% by weight of the interlayer film or in 100% by weight of the layer containing the antistatic agent.

In a specific aspect of the interlayer film according to the present invention, a ratio of the thickness of the interlayer film at the one end to the thickness of the interlayer film at the other end is 1.2 or more.

In a specific aspect of the interlayer film according to the present invention, the interlayer film has a portion with a sectional shape in the thickness direction of a wedge-like shape.

It is preferred that the interlayer film contain a plasticizer.

In a certain aspect of the interlayer film according to the present invention, the interlayer film includes a first layer and a second layer arranged on a first surface side of the first layer.

In a specific aspect of the interlayer film according to the present invention, the thermoplastic resin in the first layer is a polyvinyl acetal resin, the thermoplastic resin in the second layer is a polyvinyl acetal resin, and a content of hydroxyl group of the polyvinyl acetal resin in the first layer is lower than a content of hydroxyl group of the polyvinyl acetal resin in the second layer.

In a specific aspect of the interlayer film according to the present invention, the thermoplastic resin in the first layer is a polyvinyl acetal resin, the thermoplastic resin in the second layer is a polyvinyl acetal resin, the first layer contains a plasticizer, the second layer contains a plasticizer, and a content of the plasticizer in the first layer relative to 100 parts by weight of the polyvinyl acetal resin in the first layer is larger than a content of the plasticizer in the second layer relative to 100 parts by weight of the polyvinyl acetal resin in the second layer.

In a specific aspect of the interlayer film according to the present invention, the interlayer film includes a third layer arranged on a second surface side opposite to the first surface side of the first layer.

In a specific aspect of the interlayer film according to the present invention, the interlayer film is an interlayer film used for laminated glass serving as a head-up display.

According to a broad aspect of the present invention, there is provided a roll body including a winding core and the above-described interlayer film for laminated glass, the interlayer film for laminated glass being wound around an outer periphery of the winding core.

According to a broad aspect of the present invention, there is provided a laminated glass including a first lamination glass member, a second lamination glass member, and the interlayer film for laminated glass described above, the interlayer film for laminated glass being arranged between the first lamination glass member and the second lamination glass member.

### EFFECT OF THE INVENTION

The interlayer film for laminated glass according to the present invention includes a thermoplastic resin, and has one end and other end being at the opposite side of the one end, and the other end has a thickness that is larger than a thickness of the one end. In the interlayer film for laminated glass according to the present invention, the surface resistivity at the one end of the interlayer film after standing is 9.5 × 10¹³Ω or less, when the interlayer film has been left to stand for 7 days at 10°C and relative humidity of 50%, and the surface resistivity at the other end of the interlayer film after standing is smaller than the surface resistivity at the one end of the interlayer film after standing, the surface resistivity being measured according to the method as described herein in accordance with JIS 6911:1995 Furthermore, the interlayer film according to the present invention has a one-layer structure or a two or more-layer structure, and when the interlayer film has a one-layer structure composed only of a first layer, the first layer comprises an antistatic agent, and when the interlayer film has a two or more-layer structure, the surface layers comprise an antistatic agent, wherein the antistatic agent consists of polyoxyethylene monoalkyl ether, wherein the content of the antistatic agent is 0.05 wt.-% or more and 0.8 wt.-% or less in 100% by weight of the interlayer film or in 100% by weight of the layer containing the antistatic agent. Since the interlayer film for laminated glass according to the present invention has the above configuration, it is possible to enhance the handling property of the interlayer film and to suppress poor appearance of the laminated glass.

### BRIEF DESCRIPTION OF DRAWINGS

[Fig. 1] Figs. 1(a) and (b) are a sectional view and a front view schematically showing an interlayer film for laminated glass in accordance with a first embodiment of the present invention.
[Fig. 2] Figs. 2(a) and (b) are a sectional view and a front view schematically showing an interlayer film for laminated glass in accordance with a second embodiment of the present invention.
[Fig. 3] Fig. 3 is a perspective view schematically showing a roll body prepared by winding the interlayer film for laminated glass shown in Fig. 1.
[Fig. 4] Fig. 4 is a sectional view showing an example of laminated glass prepared with the interlayer film for laminated glass shown in Fig. 1.

### MODE(S) FOR CARRYING OUT THE INVENTION

Hereinafter, the details of the present invention will be described.

The interlayer film for laminated glass (in the present specification, sometimes abbreviated as "interlayer film") according to the present invention is used for laminated glass.

The interlayer film according to the present invention has a one-layer structure or a two or more-layer structure. The interlayer film according to the present invention may have a two-layer structure or may have a three or more-layer structure. The interlayer film according to the present invention is a single-layered interlayer film or a multi-layered interlayer film.

The interlayer film according to the present invention has one end and the other end being at the opposite side of the one end. The one end and the other end are end portions of both sides facing each other in the interlayer film. In the interlayer film according to the present invention, the thickness of the other end is larger than the thickness of the one end.

The interlayer film according to the present invention after standing that has been left to stand for 7 days at 10°C and relative humidity of 50% is sometimes described as interlayer film X in this specification.

In the present invention, a surface resistivity at the one end of the interlayer film X is 9.5 × 10¹³Ω or less. Further, in the present invention, a surface resistivity at the other end of the interlayer film X is smaller than a surface resistivity at the one end of the interlayer film X.

In the present invention, since the above configuration is provided, it is possible to suppress poor appearance of laminated glass by enhancing the handling property of the interlayer film, and to suppress double images in the laminated glass when the laminated glass is obtained by using the interlayer film according to the present invention.

In the present invention, generation of double images is suppressed when the display information from the display unit is reflected by the laminated glass.

Before laminated glass is obtained, there is a case where an interlayer film is wound so that the interlayer film is formed into a roll body. For example, in the wedge-shaped interlayer film, the thickness differs between the one end and the other end. Therefore, in a roll body, the wound state differs between the one end part and the other end part of the interlayer film.

The interlayer film in the form of the roll body is unwound to be used in preparing laminated glass. In the interlayer film according to the present invention, the handling property of the interlayer film is excellent, and deviation or meandering is hard to occur during unwinding. Therefore, the surface condition of the unwound interlayer film is hard to be impaired, or the unwound interlayer film is hard to wrinkle, so that it is possible to suppress poor appearance of the laminated glass to be obtained.

Also in the interlayer film according to the present invention, it is possible to make the pasting characteristics for laminated glass uniform at the one end and the other end in preparing laminated glass by using the interlayer film, and it is possible to enhance the handling property of the interlayer film in both cases of the interlayer film that is made into a roll body, and the interlayer film that is not made into a roll body. As a result, the contact condition between the interlayer film and the glass plate is hard to partly differ, or the interlayer film is hard to wrinkle, so that it is possible to suppress poor appearance of the laminated glass to be obtained.

From the view point of further enhancing the handling property of the interlayer film, and making poor appearance of the laminated glass be less likely to occur, the surface resistivity at the one end of the interlayer film X is 9.5 × 10¹³Ω or less. The lower limit of the surface resistivity at the one end of the interlayer film X is not particularly limited. It is preferred that the surface resistivity at the one end of the interlayer film X be as small as possible.

From the view point of further enhancing the handling property of the interlayer film, and making poor appearance of laminated glass be less likely to occur, a ratio of the surface resistivity at the other end of the interlayer film X to the surface resistivity at the one end of the interlayer film X (surface resistivity at other end/surface resistivity at one end) is preferably 0.05 or more, more preferably 0.1 or more.

From the view point of further enhancing the handling property of the interlayer film, and making poor appearance of the laminated glass be less likely to occur, the ratio (surface resistivity at other end/surface resistivity at one end) is less than 1, preferably 0.96 or less, more preferably 0.95 or less.

The surface resistivity at the other end of the interlayer film X is less than 9.5 × 10¹³Ω, preferably 9.12 × 10¹³Ω or less, more preferably 9.025 × 10¹³Ω or less. When the surface resistivity at the other end of the interlayer film X is the above upper limit or less, it is possible to further enhance the handling property of the interlayer film, and to make poor appearance of the laminated glass be less likely to occur.

The surface resistivity at one end of the interlayer film X is measured at a position of 5 cm inside from the end part of the one end side of the interlayer film X. The surface resistivity at other end of the interlayer film X is measured at a position of 5 cm inside from the end part of the other end side of the interlayer film X.

One specific method for measuring the surface resistivity is a method in accordance with JIS K 6911:1995. For measurement of the surface resistivity, a surface resistivity meter ("Hiresta-UX"available from Mitsubishi Chemical Analytech Co., Ltd.) or the like is used.

It suffices that the surface resistivity is satisfied on the surface of one side in the thickness direction of the interlayer film. Since the effect of the present invention is exerted more effectively, it is preferred that the surface resistivity be satisfied on the surface of both sides in the thickness direction of the interlayer film.

As a method for controlling the surface resistivity, a method of mixing a large amount of an antistatic agent, a method of using an antistatic agent and moisturizing, and a method of storing the interlayer film at low temperature, and the like are recited.

The interlayer film according to the present invention is suitably used for laminated glass serving as a head-up display (HUD). It is preferred that the interlayer film according to the present invention be an interlayer film for HUD.

It is preferred that the interlayer film according to the present invention have a region for display corresponding to a display region of HUD. The region for display is a region capable of favorably displaying information. It is preferred that the interlayer film according to the present invention have the region for display in a region from a position of 10 cm from the one end toward the other end to a position of 59.8 cm from the one end toward the other end. The region for display may exist in a part or the whole of the region from a position of 10 cm from the one end toward the other end to a position of 59.8 cm from the one end toward the other end.

From the viewpoint of suppressing the double images effectively, it is preferred that the interlayer film have a portion having a sectional shape of wedge-like shape in the thickness direction in the region between a position of 10 cm toward the other end from the one end and a position of 59.8 cm toward the other end from the one end. The portion having a sectional shape of wedge-like shape in the thickness direction may exist in a part or the whole of the region from a position of 10 cm from the one end toward the other end to a position of 59.8 cm from the one end toward the other end.

The interlayer film according to the present invention may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film or may be contained in the entire region in the thickness direction of the interlayer film.

From the viewpoint of providing better display, and further broadening the field of view, the visible light transmittance of the region for display is preferably 80% or more, more preferably 88% or more, further preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the interlayer film of each of the region for display and the shading region, the visible light transmittance is measured at the center position of the region for display and at the center position of the shading region.

The visible light transmittance at a wavelength ranging from 380 to 780nm of the obtained laminated glass can be measured by using a spectrophotometer ("U-4100" available from Hitachi High-Technologies Corporation) in conformity with JIS R3211 (1998). As the glass plate, it is preferred to use clear glass having a thickness of 2 mm.

It is preferred that the region for display have a length direction and a width direction. For excellent versatility of the interlayer film, it is preferred that the width direction of the region for display be the direction connecting the one end and the other end. It is preferred that the region for display be belt-shaped.

It is preferred that the interlayer film has an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. It is preferred that the one end and the other end be located on either side of the TD direction.

From the viewpoint of better display, it is preferred that the interlayer film have a portion with a sectional shape of wedge-like shape in the thickness direction. It is preferred that the sectional shape in the thickness direction of the region for display be a wedge-like shape.

Hereinafter, specific embodiments of the present invention will be described with reference to the drawings.

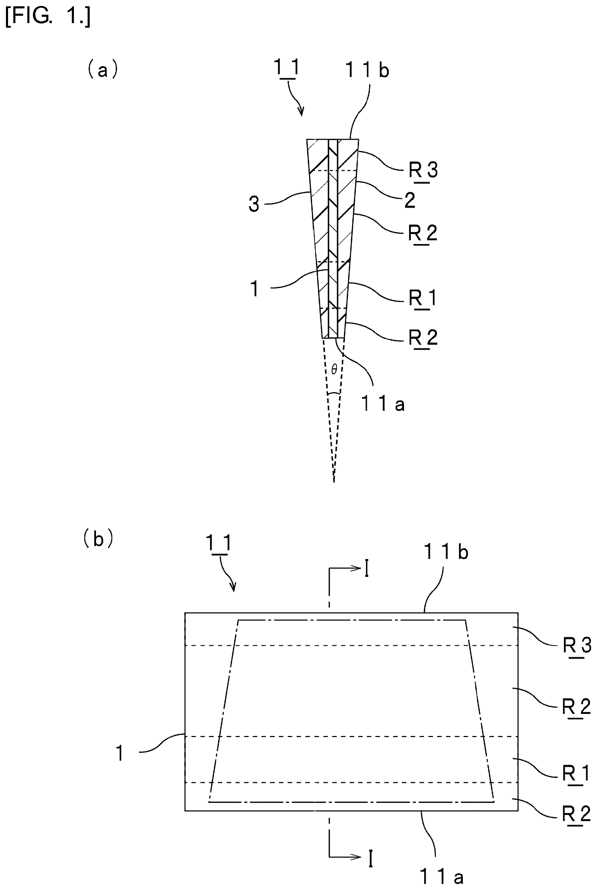

Figs. 1(a) and (b) show a sectional view and a front view schematically showing an interlayer film for laminated glass in accordance with a first embodiment of the present invention. Fig. 1(a) is a sectional view along the line I-I in Fig. 1(b). The size and dimension of the interlayer film in Fig. 1 and later described drawings are appropriately changed from the actual size and shape for convenience of illustration.

In Fig. 1(a), a section in the thickness direction of an interlayer film 11 is shown. In this connection, in Fig. 1(a) and later described drawings, for convenience of illustration, the thicknesses of an interlayer film and respective layers constituting the interlayer film and the wedge angle θ are shown so as to be different from actual thicknesses thereof and an actual wedge angle.

The interlayer film 11 shown in Figs. 1(a) and (b) is provided with a first layer 1 (intermediate layer), a second layer 2 (surface layer), and a third layer 3 (surface layer). The second layer 2 is arranged on a first surface side of the first layer 1 to be layered thereon. The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film.

The interlayer film 11 has one end 11a and the other end 11b at the opposite side of the one end 11a. The one end 11a and the other end 11b are end parts of both sides facing each other. The sectional shape in the thickness direction of each of the second layer 2 and the third layer 3 is a wedge-like shape. The sectional shape in the thickness direction of the first layer 1 is a rectangular shape. With respect to the thickness of each of the second layer 2 and the third layer 3, the thickness at the other end 11b side is larger than the thickness at the one end 11a side. Accordingly, the thickness of the other end 11b of the interlayer film 11 is larger than the thickness of the one end 11a thereof. Accordingly, the interlayer film 11 has a region being thin in thickness and a region being thick in thickness.

The interlayer film 11 has a region for display R1 corresponding to a display region of a head-up display. The interlayer film 11 has a peripheral region R2 neighboring the region for display R1. In the present embodiment, the region for display R1 is a region between a position of 10 cm toward the other end 11b from the one end 11a and a position of 59.8 cm toward the other end 11b from the one end 11a.

The interlayer film 11 has a shading region R3 that is separate from the region for display R1. The shading region R3 is located in an edge portion of the interlayer film 11.

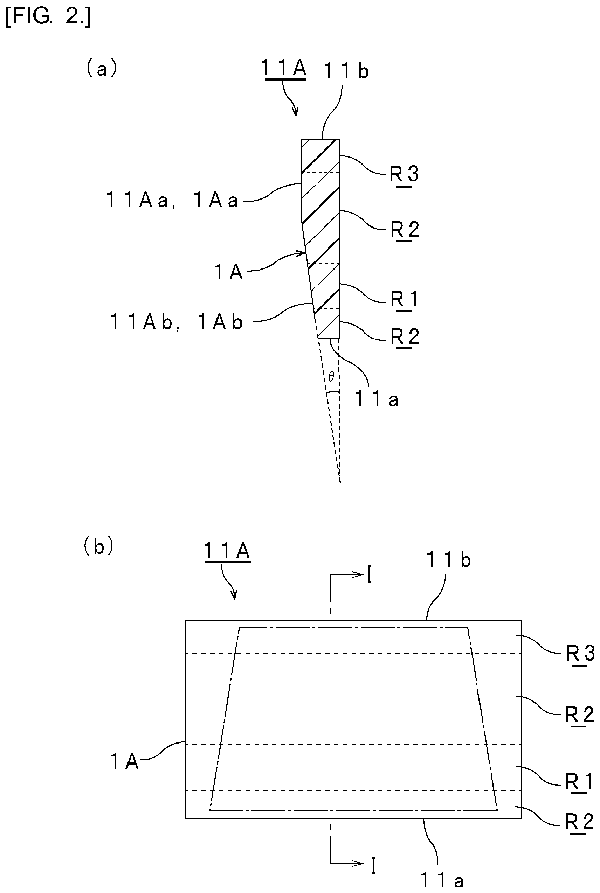

Figs. 2(a) and (b) show a sectional view and a front view schematically showing an interlayer film for laminated glass in accordance with a second embodiment of the present invention. Fig. 2(a) is a sectional view along the line I-I in Fig. 2(b). In Fig. 2(a), a section in the thickness direction of an interlayer film 11A is shown.

The interlayer film 11A shown in Figs. 2(a) and (b) is provided with a first layer 1A. The interlayer film 11A has a one-layer structure composed only of the first layer 1A and is a single-layered interlayer film. The interlayer film 11A is the first layer 1A itself. The interlayer film 11A is used for obtaining laminated glass. The interlayer film 11A is an interlayer film for laminated glass.

The interlayer film 11A has one end 11a and the other end 11b at the opposite side of the one end 11a. The one end 11a and the other end 11b are end parts of both sides facing each other. The thickness of the other end 11b of the interlayer film 11A is larger than the thickness of the one end 11a thereof. Accordingly, the interlayer film 11A and the first layer 1A each have a region being thin in thickness and a region being thick in thickness.

The interlayer film 11A and the first layer 1A have portions 11Aa, 1Aa having a rectangular sectional shape in the thickness direction, and portions 11Ab, 1Ab having a wedge-like sectional shape in the thickness direction.

The interlayer film 11A has a region for display R1 corresponding to a display region of a head-up display. The interlayer film 11A has a peripheral region R2 neighboring the region for display R1.

The interlayer film 11A has a shading region R3 that is separate from the region for display R1. The shading region R3 is located in an edge portion of the interlayer film 11A.

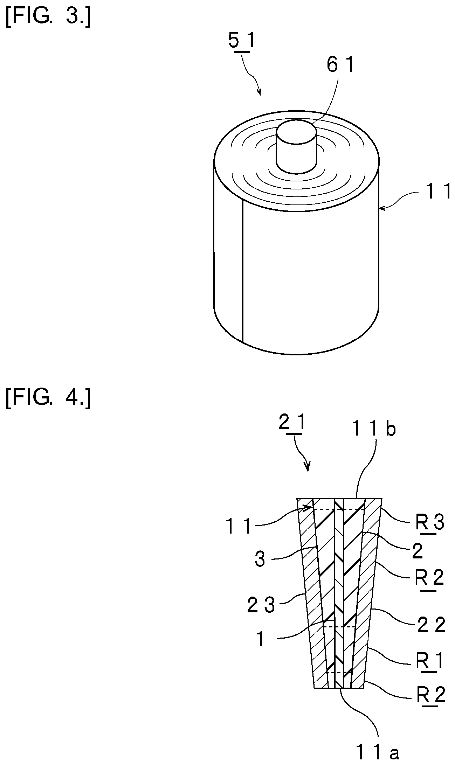

Fig. 3 is a perspective view schematically showing a roll body prepared by winding the interlayer film for laminated glass shown in Fig. 1.

The interlayer film 11 may be wound to be formed into a roll body 51 of the interlayer film 11.

The roll body 51 shown in Fig. 3 is provided with a winding core 61 and the interlayer film 11. The interlayer film 11 is wound around an outer periphery of the winding core 61.

It is preferred that the interlayer film have a portion with a sectional shape in the thickness direction of a wedge-like shape. It is preferred that the interlayer film have a portion where the thickness gradually increases from one end toward the other end. It is preferred that the sectional shape in the thickness direction of the interlayer film be a wedge-like shape. Examples of the sectional shape in the thickness direction of the interlayer film include a trapezoidal shape, a triangular shape, a pentagonal shape, and the like.

In order to suppress double images, the wedge angle θ of the interlayer film can be appropriately set according to the fitting angle of laminated glass. From the viewpoint of further suppressing double images, the wedge angle θ of the interlayer film is preferably 0.01 mrad (0.0006 degrees) or more, more preferably 0.1 mrad (0.00575 degrees) or more, further preferably 0.2 mrad (0.0115 degrees) or more. When the wedge angle θ is the above lower limit or more, it is possible to obtain laminated glass suited for cars such as a truck or a bus in which the attachment angle of the windshield is large.

From the viewpoint of further suppressing double images, the wedge angle θ of the interlayer film is preferably 2 mrad (0.1146 degrees) or less, more preferably 0.7 mrad (0.0401 degrees) or less, further preferably 0.5 mrad (0.0288 degrees) or less, especially preferably 0.47 mrad (0.027 degrees) or less. When the wedge angle θ is the above upper limit or less, it is possible to obtain laminated glass suited for cars such as a sports car in which the attachment angle of the windshield is small.

The wedge angle θ of the interlayer film is an interior angle formed at the intersection point between a straight line connecting a point on the first surface (one surface) of the maximum thickness part of the interlayer film and a point on the first surface of the minimum thickness part thereof and a straight line connecting a point on the second surface (the other surface) of the maximum thickness part of the interlayer film and a point on the second surface of the minimum thickness part thereof. When there are a plurality of maximum thicknesses parts, there are a plurality of minimum thicknesses parts, or the minimum thickness part is located in a certain region, the maximum thickness part and the minimum thickness part for determining the wedge angle θ are selected so that the wedge angle θ to be determined is the maximum.

From the view point of further suppressing double images, further enhancing the handling property of the interlayer film, and making poor appearance of laminated glass be less likely to occur, a ratio of the thickness of the interlayer film at the other end to the thickness of the interlayer film at the one end is preferably 1.2 or more, more preferably 1.25 or more, and is preferably 4 or less, more preferably 3.7 or less.

The thickness of the interlayer film is not particularly limited. The thickness of the interlayer film refers to the total thickness of the respective layers constituting the interlayer film. Thus, in the case of a multi-layered interlayer film 11, the thickness of the interlayer film refers to the total thickness of the first layer 1, the second layer 2, and the third layer 3.

The maximum thickness of the interlayer film is preferably 0.1 mm or more, more preferably 0.25 mm or more, further preferably 0.5 mm or more, especially preferably 0.8 mm or more and is preferably 3 mm or less, more preferably 2 mm or less, further preferably 1.5 mm or less.

A distance between the one end and the other end is defined as X. It is preferred that the interlayer film have a minimum thickness in the region at a distance of 0X to 0.2X inwardly from the one end, and a maximum thickness in the region at a distance of 0X to 0.2X inwardly from the other end. It is more preferred that the interlayer film have a minimum thickness in the region at a distance of 0X to 0.1X inwardly from the one end, and a maximum thickness in the region at a distance of 0X to 0.1X inwardly from the other end. It is preferred that the interlayer film have a minimum thickness at the one end and the interlayer film have a maximum thickness at the other end. The interlayer film 11, 11A has a maximum thickness at the other end 11b and a minimum thickness at the one end 11a.

The interlayer film may have a uniform-thickness part. The uniform-thickness part means that the variation in thickness does not exceed 10 µm per a distance range of 10 cm in the direction connecting the one end and the other end of the interlayer film. Therefore, the uniform-thickness part refers to the part where the variation in thickness does not exceed 10 µm per a distance range of 10 cm in the direction connecting the one end and the other end of the interlayer film. To be more specific, the uniform-thickness part refers to the part where the thickness does not vary at all in the direction connecting the one end and the other end of the interlayer film, or the thickness varies by 10 µm or less per a distance range of 10 cm in the direction connecting the one end and the other end of the interlayer film.

From the viewpoint of the practical aspect and the viewpoint of sufficiently enhancing the adhesive force and the penetration resistance, the maximum thickness of a surface layer is preferably 0.001 mm or more, more preferably 0.2 mm or more, further preferably 0.3 mm or more, and is preferably 1 mm or less, more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, further preferably 0.2 mm or more, and is preferably 0.8 mm or less, more preferably 0.6 mm or less, further preferably 0.3 mm or less.

The distance X between one end and the other end of the interlayer film is preferably 3 m or less, more preferably 2 m or less, especially preferably 1.5 m or less, and is preferably 0.5 m or more, more preferably 0.8 m or more, especially preferably 1 m or more.

Hereinafter, the details of materials constituting the respective layers of a multi-layered interlayer film and the single-layered interlayer film will be described.

### (Thermoplastic resin)

The interlayer film (the respective layers) contains a thermoplastic resin (hereinafter, sometimes described as a thermoplastic resin (0)). It is preferred that the interlayer film (the respective layers) contain a polyvinyl acetal resin (hereinafter, sometimes described as a polyvinyl acetal resin (0)) as the thermoplastic resin (0). It is preferred that the first layer contain a thermoplastic resin (hereinafter, sometimes described as a thermoplastic resin (1)) and it is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)) and it is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)) and it is preferred that the third layer contain a polyvinyl acetal resin (hereinafter, sometimes described as a polyvinyl acetal resin (3)) as the thermoplastic resin (3).

The thermoplastic resin (1), the thermoplastic resin (2), and the thermoplastic resin (3) may be the same or different from one another. For still higher sound insulating properties, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating properties, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl acetate resin, and a polystyrene resin, and the like. Thermoplastic resins other than these may be used.

It is preferred that the thermoplastic resin be a polyvinyl acetal resin. By using a polyvinyl acetal resin and a plasticizer together, the adhesive force of the interlayer film according to the present invention to a lamination glass member or another interlayer film is further enhanced.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

A content of the hydroxyl group (the amount of hydroxyl groups) of the polyvinyl acetal resin (0) is preferably 15% by mole or more and more preferably 18% by mole or more and is preferably 40% by mole or less and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating properties of laminated glass are further enhanced. Moreover, when the content of the hydroxyl group is the above upper limit or less, the flexibility of the interlayer film is enhanced and the handling of the interlayer film is facilitated.

Each of the contents of the hydroxyl group of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating properties, it is preferred that the content of the hydroxyl group of the polyvinyl acetal resin (1) be lower than the content of the hydroxyl group of the polyvinyl acetal resin (2). From the viewpoint of further enhancing the sound insulating properties, it is preferred that the content of the hydroxyl group of the polyvinyl acetal resin (1) be lower than the content of the hydroxyl group of the polyvinyl acetal resin (3). From the viewpoint of still further enhancing the sound insulating properties, the absolute value of a difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating properties, the absolute value of a difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. The absolute value of a difference between the content of the hydroxyl group of the polyvinyl acetal resin (1) and the content of the hydroxyl group of the polyvinyl acetal resin (2) and the absolute value of a difference between the content of the hydroxyl group of the polyvinyl acetal resin (1) and the content of the hydroxyl group of the polyvinyl acetal resin (3) are preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, further preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more and more preferably 0.5% by mole or more and is preferably 10% by mole or less and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more and more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

The acetalization degree can be calculated by a method in accordance with JIS K6728 "Testing methods for polyvinyl butyral" or a method in accordance with ASTM D1396-92.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

From the viewpoint of further enhancing the adhesive force of an interlayer film, it is preferred that the interlayer film according to the present invention contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include, but are not particularly limited to, a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include, but are not particularly limited to, an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include, but are not particularly limited to, triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include, but are not particularly limited to, tributoxyethyl phosphate, isodecyl phenyl phosphate, triisopropyl phosphate, and the like.

It is preferred that the plasticizer be a diester plasticizer represented by the following formula (1).

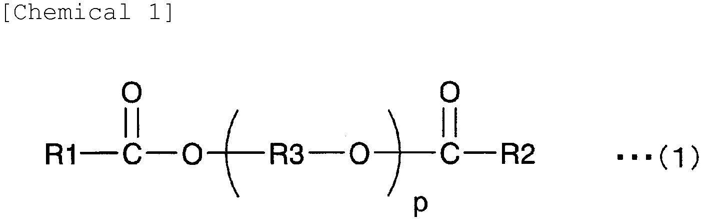

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH), and it is more preferred that the plasticizer include triethylene glycol di-2-ethylhexanoate.

In the interlayer film, the content of the plasticizer (0) relative to 100 parts by weight of the thermoplastic resin (0) is referred to as content (0). The content (0) is preferably 25 parts by weight or more, more preferably 30 parts by weight or more, and is preferably 100 parts by weight or less, more preferably 60 parts by weight or less, further preferably 50 parts by weight or less. When the content (0) is the above lower limit or more, the penetration resistance of laminated glass is further enhanced. When the content (0) is the above upper limit or less, the transparency of the interlayer film is further enhanced.

In the first layer, the content of the plasticizer (1) relative to 100 parts by weight of the thermoplastic resin (1) is referred to as content (1). The content (1) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, the content of the plasticizer (2) relative to 100 parts by weight of the thermoplastic resin (2) is referred to as content (2). In the third layer, the content of the plasticizer (3) relative to 100 parts by weight of the thermoplastic resin (3) is referred to as content (3). Each of the content (2) and the content (3) is preferably 10 parts by weight or more, more preferably 15 parts by weight or more, further preferably 20 parts by weight or more, especially preferably 24 parts by weight or more, and is preferably 40 parts by weight or less, more preferably 35 parts by weight or less, further preferably 32 parts by weight or less, especially preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of laminated glass is further enhanced.

For the purpose of enhancing the sound insulating properties of laminated glass, it is preferred that the content (1) be larger than the content (2) and it is preferred that the content (1) be larger than the content (3) .

From the viewpoint of further enhancing the sound insulating properties of laminated glass, each of the absolute value of the difference between the content (2) and the content (1) and the absolute value of the difference between the content (3) and the content (1) is preferably 5 parts by weight or more, more preferably 8 parts by weight or more, further preferably 10 parts by weight or more, especially preferably more than 15 parts by weight, most preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

### (Antistatic agent)

For adjusting the surface resistivity, an antistatic agent is used. In a multilayer interlayer film, it the surface layers contain the antistatic agent.

The antistatic agent consists of polyoxyethylene monoalkyl ether.

In 100% by weight of the interlayer film or in 100% by weight of a layer containing the antistatic agent (a first layer, a second layer or a third layer), the content of the antistatic agent is 0.05% by weight or more and 0.8% by weight or less. Although the surface resistivity is not determined only by the content of the antistatic agent, it is easy to control the surface resistivity within a favorable range when the content of the antistatic agent is the above lower limit or more and the above upper limit or less.

### (Heat shielding compound)

It is preferred that the interlayer film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

### Ingredient X:

It is preferred that the interlayer film contain a phthalocyanine compound, a naphthalocyanine compound, or an anthracyanine compound (hereinafter, a phthalocyanine compound, a naphthalocyanine compound, and an anthracyanine compound are also called Ingredient X). It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be phthalocyanine, a derivative of phthalocyanine, naphthalocyanine or a derivative of naphthalocyanine, and it is more preferred that the Ingredient X be phthalocyanine or a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be phthalocyanine containing vanadium atoms or copper atoms or a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, preferably 0.1 µm or less and more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding properties are sufficiently enhanced and the visible light transmittance is sufficiently enhanced.

### (Metal salt)

It is preferred that the interlayer film contain an alkali metal salt, an alkaline earth metal salt, or a magnesium salt (hereinafter, these are sometimes described as Metal salt M). It is preferred that the interlayer film contain alkali metal derived from the Metal salt M. It is preferred that the interlayer film contain alkaline earth metal derived from the Metal salt M. It is preferred that the interlayer film contain magnesium derived from the Metal salt M. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain Li, Na, K, Rb, Cs, Mg, Ca, Sr or Ba. It is preferred that the metal salt included in the interlayer film contain K or Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

The magnesium carboxylate with 2 to 16 carbon atoms and the potassium carboxylate with 2 to 16 carbon atoms are not particularly limited. Examples of these metal salts include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in an interlayer film containing the Metal salt M or a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl) oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. When the content of the ultraviolet ray screening agent and the content of the benzotriazole compound are the above lower limit or more and the above upper limit or less, deterioration in visible light transmittance after a lapse of a period can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid) ethylenebis (oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer, and the third layer may contain additives such as a coupling agent, a dispersing agent, a surfactant, a flame retardant, a pigment, a dye, an adhesivity adjusting agent other than metal salt, a moisture-resistance agent, a fluorescent brightening agent, and an infrared ray absorber, as necessary. One kind of these additives may be used alone, and two or more kinds thereof may be used in combination.

### (Laminated glass)

Fig. 4 is a sectional view showing an example of laminated glass prepared with the interlayer film for laminated glass shown in Fig. 1.

A laminated glass 21 shown in Fig. 4 is provided with the interlayer film 11, a first lamination glass member 22, and a second lamination glass member 23. The interlayer film 11 is arranged between the first lamination glass member 22 and the second lamination glass member 23 to be sandwiched therebetween. The first lamination glass member 22 is arranged on a first surface of the interlayer film 11. The second lamination glass member 23 is arranged on a second surface opposite to the first surface of the interlayer film 11.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and is preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The method for producing the laminated glass is not particularly limited. For example, the interlayer film is sandwiched between the first and second lamination glass members, and then, passed through pressure rolls or subjected to decompression suction in a rubber bag. Therefore, the air remaining between the first lamination glass member and the interlayer film and between the second lamination glass member and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

The laminated glass is a kind of laminated glass serving as a head-up display (HUD). In the laminated glass, measured information such as the speed which is sent from a control unit and the like can be projected onto the windshield from a display unit of the instrumental panel. As such, without making a driver of an automobile move his or her visual field downward, a front visual field and measured information can be visually recognized simultaneously.

Hereinafter, the present invention will be described in more detail with reference to examples. The present invention is not limited only to these examples.

The following materials were prepared.

### (Thermoplastic resin)

PVB (1) (polyvinyl acetal resin, average polymerization degree: 1700, content of hydroxyl group: 30.5% by mole, acetylation degree: 1% by mole, acetalization degree: 68.5% by mole)
PVB (2) (polyvinyl acetal resin, average polymerization degree: 2300, content of hydroxyl group: 22% by mole, acetylation degree: 13% by mole, acetalization degree: 65% by mole)
PVB (3) (polyvinyl acetal resin, content of hydroxyl group: 17% by mole, acetylation degree: 7% by mole, acetalization degree: 76% by mole)
PVB (4) (polyvinyl acetal resin, content of hydroxyl group: 23% by mole, acetylation degree: 8% by mole, acetalization degree: 69% by mole)
PVB (5) (polyvinyl acetal resin, content of hydroxyl group: 19% by mole, acetylation degree: 1% by mole, acetalization degree: 80% by mole)

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.
(Plasticizer)
   3GO (triethylene glycol di-2-ethylhexanoate)
   3GH (triethylene glycol di-2-ethylbutyrate)
(Antistatic agent)
   NOIGEN ET-83 (DKS Co., Ltd.)
   NYMEEN S-207 (NOF CORPORATION)
   NYMEEN S-220 (NOF CORPORATION)
(Ultraviolet ray screening agent)
   Tinuvin 326 (2-(2'-hydroxy-3'-t-butyl-5-methylphenyl)-5-chlorobenzotriazole, available from BASF Japan Ltd.)
(Oxidation inhibitor)
   BHT (2,6-di-t-butyl-p-cresol)

### (Example 1)

Preparation of composition for forming interlayer film:
To 100 parts by weight of PVB (1), 40 parts by weight of 3GO, 0.3 parts by weight of NOIGEN ET-83, 0.2 parts by weight of Tinuvin 326, and 0.2 parts by weight of BHT were added, and sufficiently kneaded with a mixing roll to obtain a composition for forming an interlayer film.

### Preparation of interlayer film:

The composition for forming an interlayer film was extruded by using an extruder. In Example 1, an interlayer film was extrusion molded to prepare a wedge-like single-layered interlayer film. Also, under the condition of the winding tension of 200 N, 125 m of the interlayer film was wound around a winding core (material: talc-containing polypropylene) (15 cm in outer diameter, 120 cm in height) available from KOGA POLYMER CO., LTD. so that the extruding direction of the interlayer film and the outer circumferential direction of the winding core coincide with each other, to obtain a roll body. The obtained interlayer film had a minimum thickness at one end and had a maximum thickness at the other end, and did not have a uniform-thickness part. In the obtained interlayer film, the distance X between the one end and the other end was about 1 m.

### (Examples 2 to 5, 11 to 15 and Comparative Examples 1, 2, 5, 6)

A wedge-like single-layered interlayer film and a roll body were prepared in the same manner as in Example 1 except that each of the kinds of ingredients, the amounts of ingredients, the wedge angle and the thickness was set as shown in the following Tables 1, 3.

### (Example 21)

A wedge-like single-layered interlayer film and a roll body were prepared in the same manner as in Example 1 except that each of the kinds of ingredients, the amounts of ingredients, the wedge angle and the thickness was set as shown in the following Table 5, and a uniform-thickness part was formed. The obtained interlayer film has a uniform-thickness part spanning from the other end to a distance of 100 mm toward the one end, and having a uniform thickness, and the length of the uniform-thickness part was 100 mm.

### (Examples 22 to 25 and Comparative Examples 9, 10)

A wedge-like single-layered interlayer film and a roll body were prepared in the same manner as in Example 21 except that each of the kinds of ingredients, the amounts of ingredients, the wedge angle, the thickness, and the length of the uniform-thickness part was set as shown in the following Table 5.

### (Example 6)

Preparation of composition for forming first layer:
To 100 parts by weight of PVB (2), 60 parts by weight of 3GO, 0.2 parts by weight of Tinuvin 326, and 0.2 parts by weight of BHT were added, and sufficiently kneaded with a mixing roll to obtain a composition for forming a first layer.

### Preparation of composition for forming second layer and third layer:

To 100 parts by weight of PVB (1), 40 parts by weight of 3GO, 0.3 parts by weight of NOIGEN ET-83, 0.2 parts by weight of Tinuvin 326, and 0.2 parts by weight of BHT were added, and sufficiently kneaded with a mixing roll to obtain a composition for forming a second layer and a third layer.

### Preparation of interlayer film:

The composition for forming the first layer, and the composition for forming the second layer and the third layer were coextruded by using a co-extruder. A wedge-like interlayer film having a multilayer structure of the second layer/the first layer/the third layer was prepared. Also, under the condition of the winding tension of 200 N, 125 m of the interlayer film was wound around a winding core (material: talc-containing polypropylene) (15 cm in outer diameter, 120 cm in height) available from KOGA POLYMER CO., LTD. so that the extruding direction of the interlayer film and the outer circumferential direction of the winding core coincide with each other, to obtain a roll body. The obtained interlayer film had a minimum thickness at one end and had a maximum thickness at the other end, and did not have a uniform-thickness part. In the obtained interlayer film, the distance X between the one end and the other end was about 1 m. When the average thickness of the interlayer film is defined as T, the average thickness of the first layer was 0.12T, and the total of the average thickness of the second layer and the average thickness of the third layer was 0.88T. The average thickness of the second layer and the average thickness of the third layer were equivalent.

### (Examples 7 to 10, 16 to 20 and Comparative Examples 3, 4, 7, 8)

A wedge-like multi-layered interlayer film and a roll body were prepared in the same manner as in Example 6 except that each of the kinds of ingredients, the amounts of ingredients, the wedge angle and the thickness was set as shown in the following Tables 2, 4.

### (Example 26)

A wedge-like single-layered interlayer film and a roll body were prepared in the same manner as in Example 6 except that each of the kinds of ingredients, the amounts of ingredients, the wedge angle and the thickness was set as shown in the following Table 6, and a uniform-thickness part was formed. The obtained interlayer film has a uniform-thickness part spanning from the other end to a distance of 100 mm toward the one end, and having a uniform thickness, and the length of the uniform-thickness part was 100 mm.

### (Examples 27 to 30 and Comparative Examples 11, 12)

A wedge-like single-layered interlayer film and a roll body were prepared in the same manner as in Example 26 except that each of the kinds of ingredients, the amounts of ingredients, the wedge angle, the thickness, and the length of the uniform-thickness part was set as shown in the following Table 6.

### (Evaluation)

### (1) Surface resistivity

The obtained interlayer film was left to stand for 7 days at 10°C and relative humidity of 50% to obtain an interlayer film X after standing.

The surface resistivity at one end of the interlayer film X and the surface resistivity at other end of the interlayer film X were measured. Specifically, evaluation was conducted by a method in accordance with JIS K 6911:1995 using a surface resistivity meter ("Hiresta-UX"available from Mitsubishi Chemical Analytech Co., Ltd.).

The interlayer film was cut out into a square of 10 cm × 10 cm including one end of the interlayer film as one side, and an electrode was installed in the center of the cut interlayer film. The surface resistivity at one end of the interlayer film X was measured at a position of 5 cm inside from the end part of the one end side of the interlayer film X.

The interlayer film was cut out into a square of 10 cm × 10 cm including other end of the interlayer film as one side, and an electrode was installed in the center of the cut interlayer film. The surface resistivity at other end of the interlayer film X was measured at a position of 5 cm inside from the end part of the other end side of the interlayer film X.

The surface resistivity at one end of the interlayer film X showed the same value on the surface of both sides of the interlayer film. The surface resistivity at other end of the interlayer film X showed the same value on both sides of the interlayer film.

### (2) Handling property of interlayer film in roll body state

The interlayer film was unwound by drawing out the obtained roll body. The handling property of the interlayer film in a roll body state was judged in the following criteria.

### [Handling property of interlayer film in roll body state]

○: No deviation or meandering observed during unwinding, and the interlayer film is unwound in the condition that the surface condition of the interlayer film is excellent and the interlayer film has no wrinkle both at one end and other end of the interlayer film.
×: Deviation or meandering observed during unwinding, and the interlayer film is unwound in the condition that the surface condition of the interlayer film is impaired or the interlayer film has a wrinkle at one end or other end of the interlayer film.

### (3) Handling property of interlayer film in preparing laminated glass

A pair of glass plates (clear glass, the size of 510 mm × 1000 mm, 2.0 mm in thickness) was prepared. The obtained interlayer film was cut out in a size corresponding to the size of the glass plate.

The interlayer film was sandwiched between the pair of glass plates to obtain a laminate. The obtained laminate was fitted into a frame of an EPDM-made rubber tube (frame member). The rubber tube had a width of 15 mm. Next, the laminate fitted into a frame of an EPDM-made rubber tube was preliminarily press-bonded by a vacuum bag method. The preliminarily press-bonded laminate was subjected to press-bonding at 150°C and a pressure of 1.2 MPa with the use of an autoclave to obtain a sheet of laminated glass.

The handling property of the interlayer film in preparing the laminated glass was judged in the following criteria.

### [Handling property of interlayer film in preparing laminated glass]

○: Unintended pasting does not occur both at one end and other end of the interlayer film, and laminated glass in which the contact condition between the interlayer film and the glass plates is excellent, and there is no wrinkle in the interlayer film is obtained.
×: Unintended pasting occurs either at one end or other end of the interlayer film, and laminated glass in which the contact condition between the interlayer film and the glass plates partly differs, or there is a wrinkle in the interlayer film is obtained.

### (4) Double images

A pair of glass plates (clear glass, the size of 510 mm × 910 mm, 2.0 mm in thickness) was prepared. An interlayer film with a size corresponding to the size of the glass plate was sandwiched between the pair of glass plates to obtain a laminate. The obtained laminate was fitted into a frame of an EPDM-made rubber tube (frame member). The rubber tube had a width of 15 mm. Next, the laminate fitted into a frame of an EPDM-made rubber tube was preliminarily press-bonded by a vacuum bag method. The preliminarily press-bonded laminate was subjected to press-bonding at 150°C and a pressure of 1.2 MPa with the use of an autoclave to obtain a sheet of laminated glass.

The obtained sheet of laminated glass was installed at a position of the windshield with one end of the interlayer film down. The information to be displayed, which is emitted from a display unit installed below the sheet of laminated glass, was reflected by the sheet of laminated glass to visually confirm the presence or absence of double images at a prescribed position. The double images were judged according to the following criteria.

### [Criteria for judgment in double images]

○: Double images are not confirmed.
×: Double images are confirmed.

The details and the results of the interlayer film are shown in the following Tables 1 to 6. When the evaluation result of the handling property was excellent, laminated glass in which poor appearance was suppressed was obtained. In Tables, "E+12" indicates "10¹²", "E+13" indicates "10¹³" and "E+14" indicates "10¹⁴".

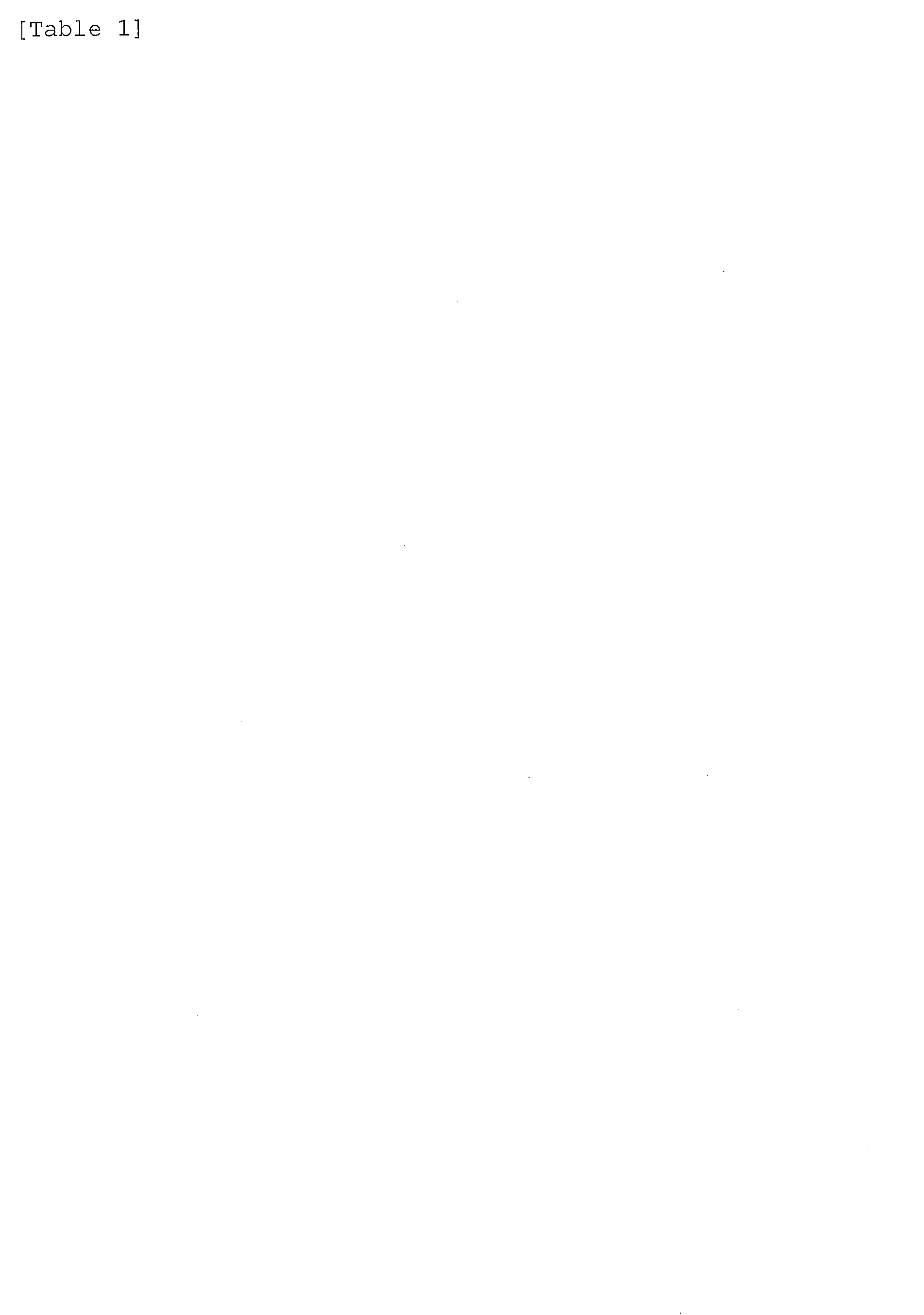

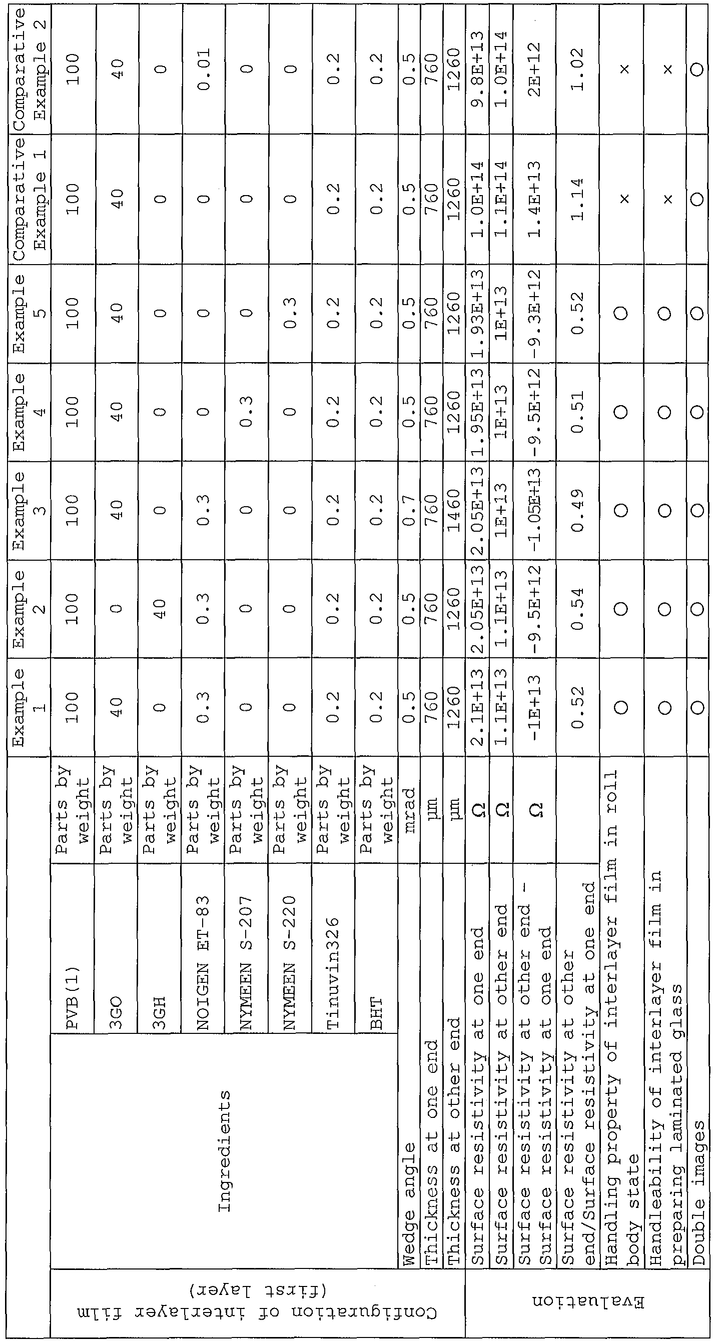

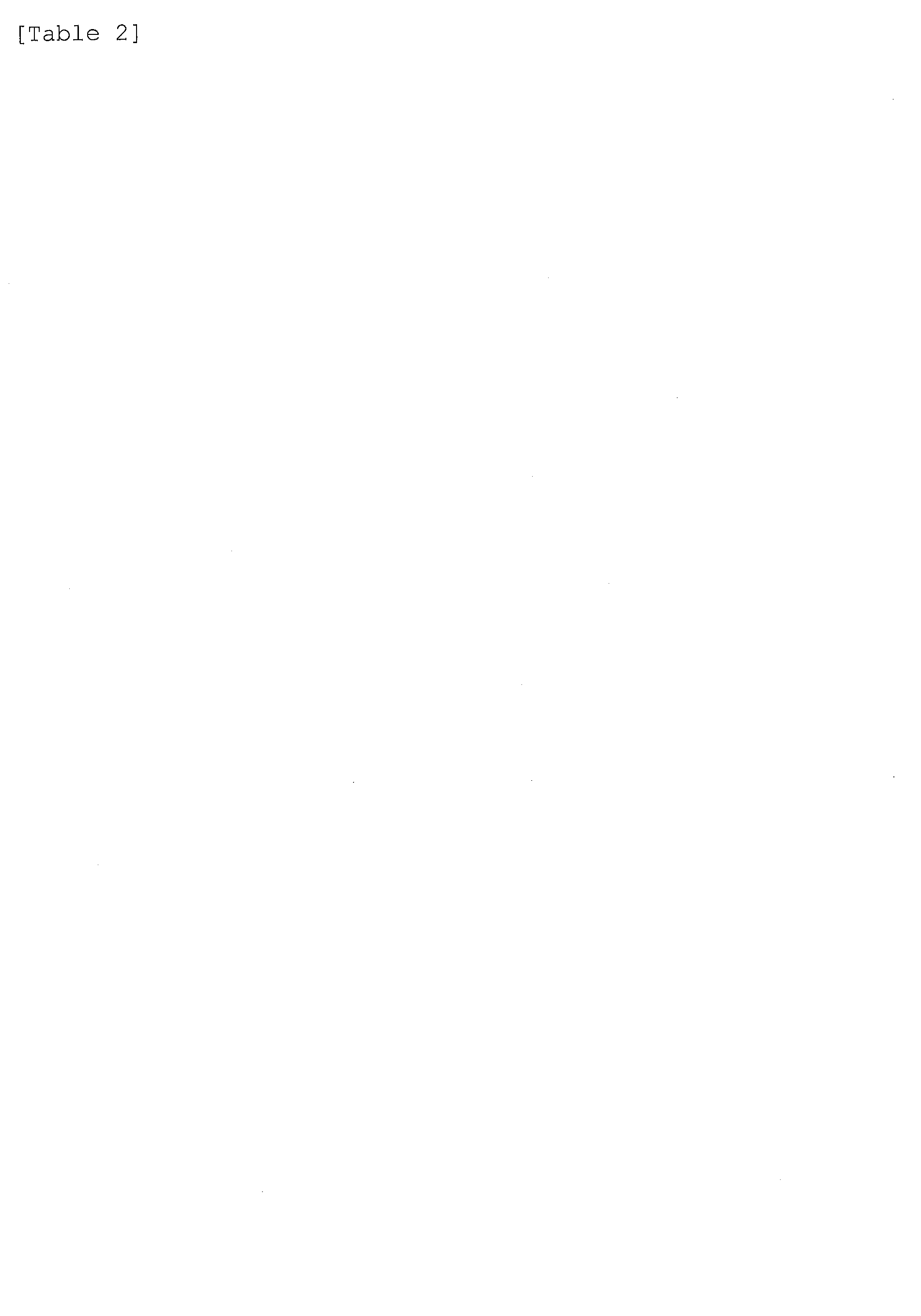

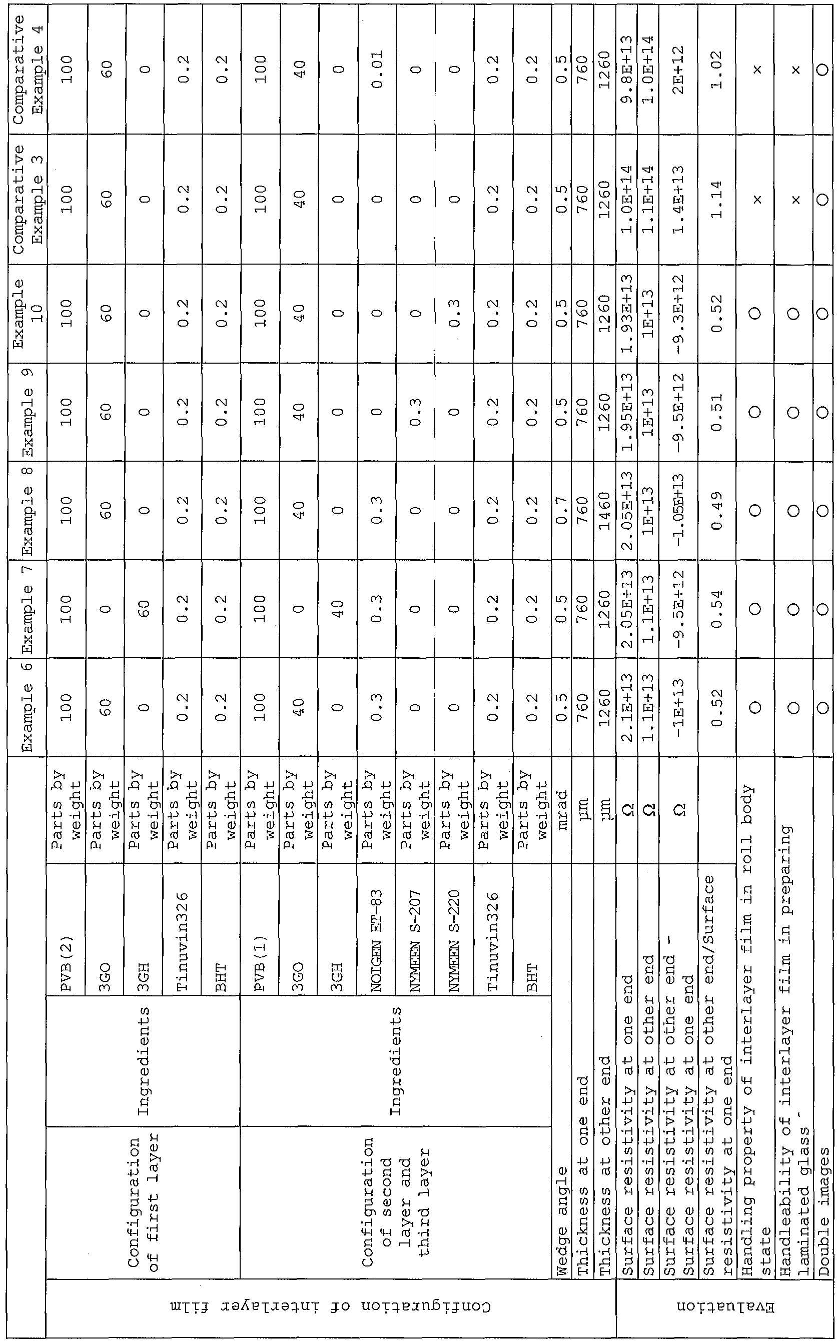

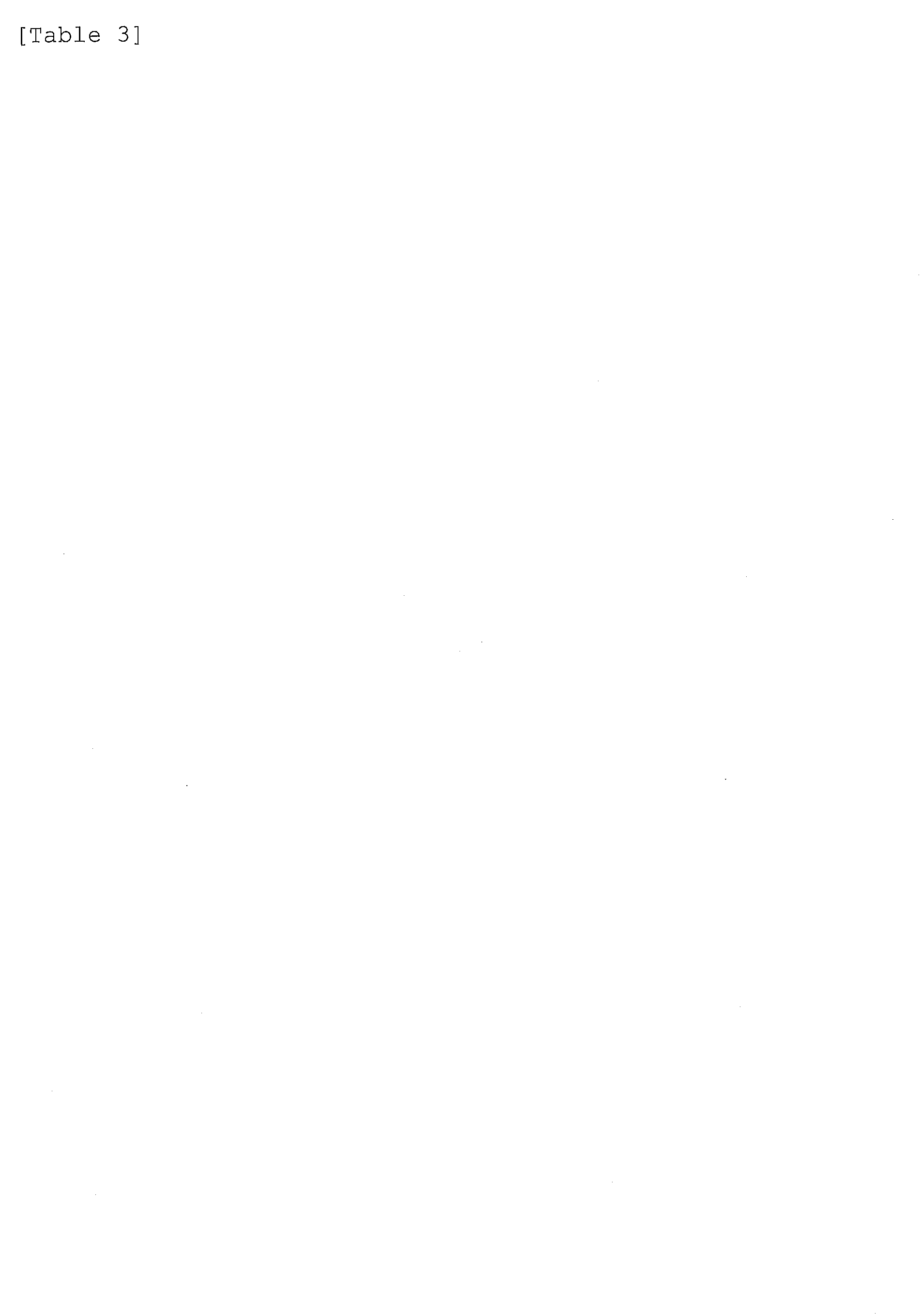

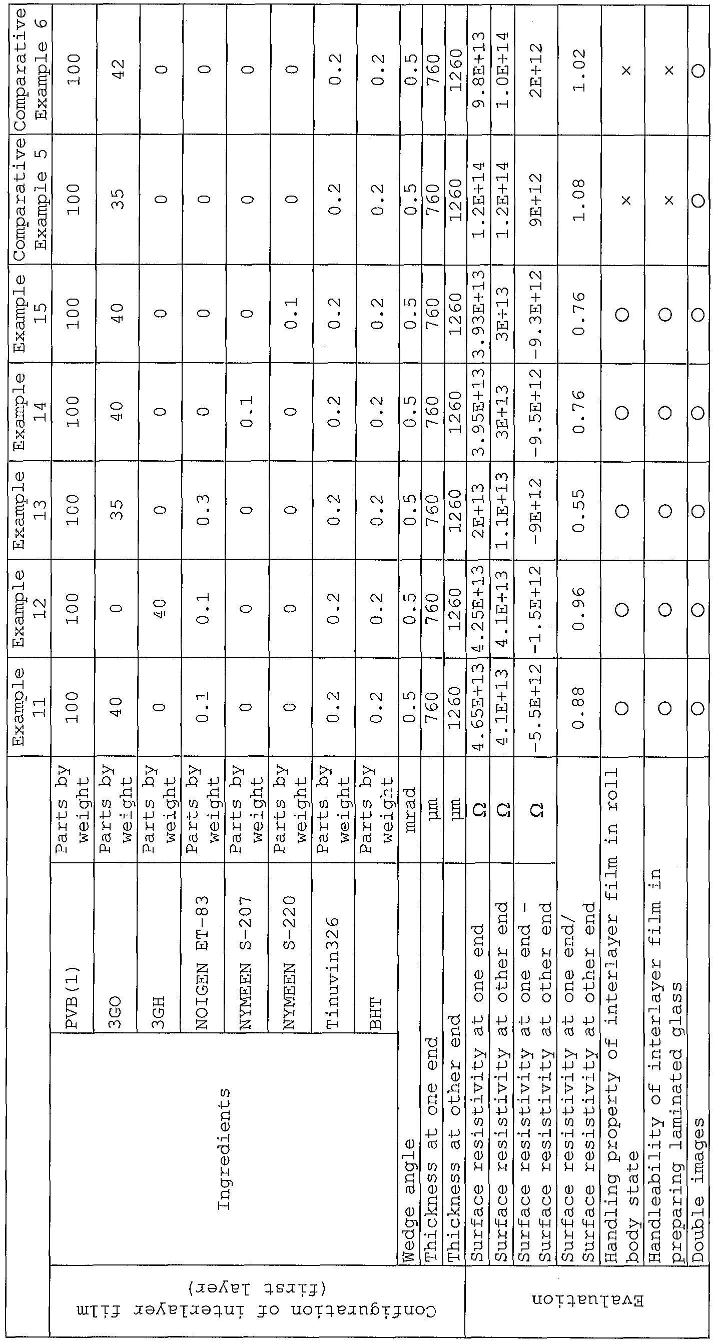

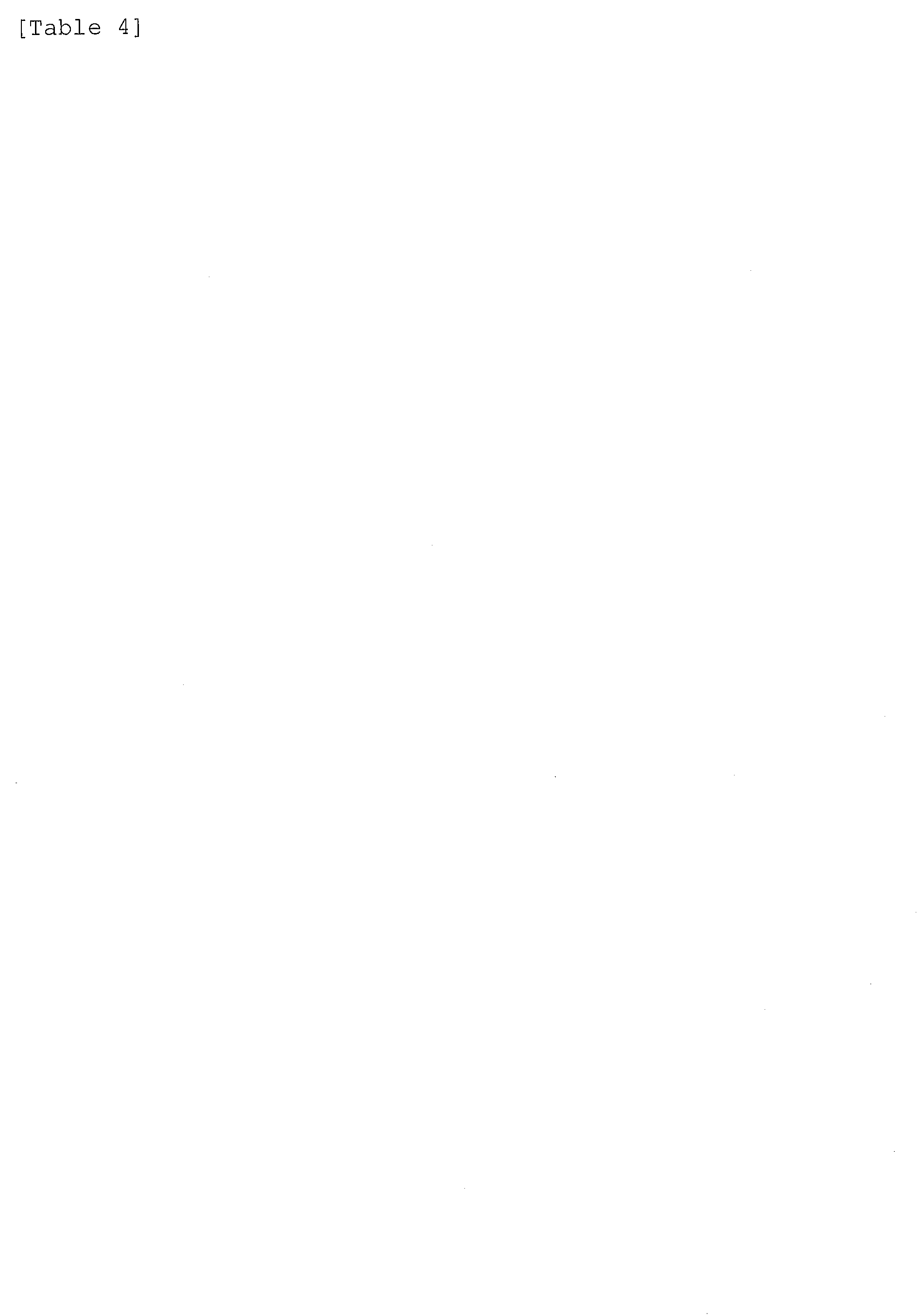

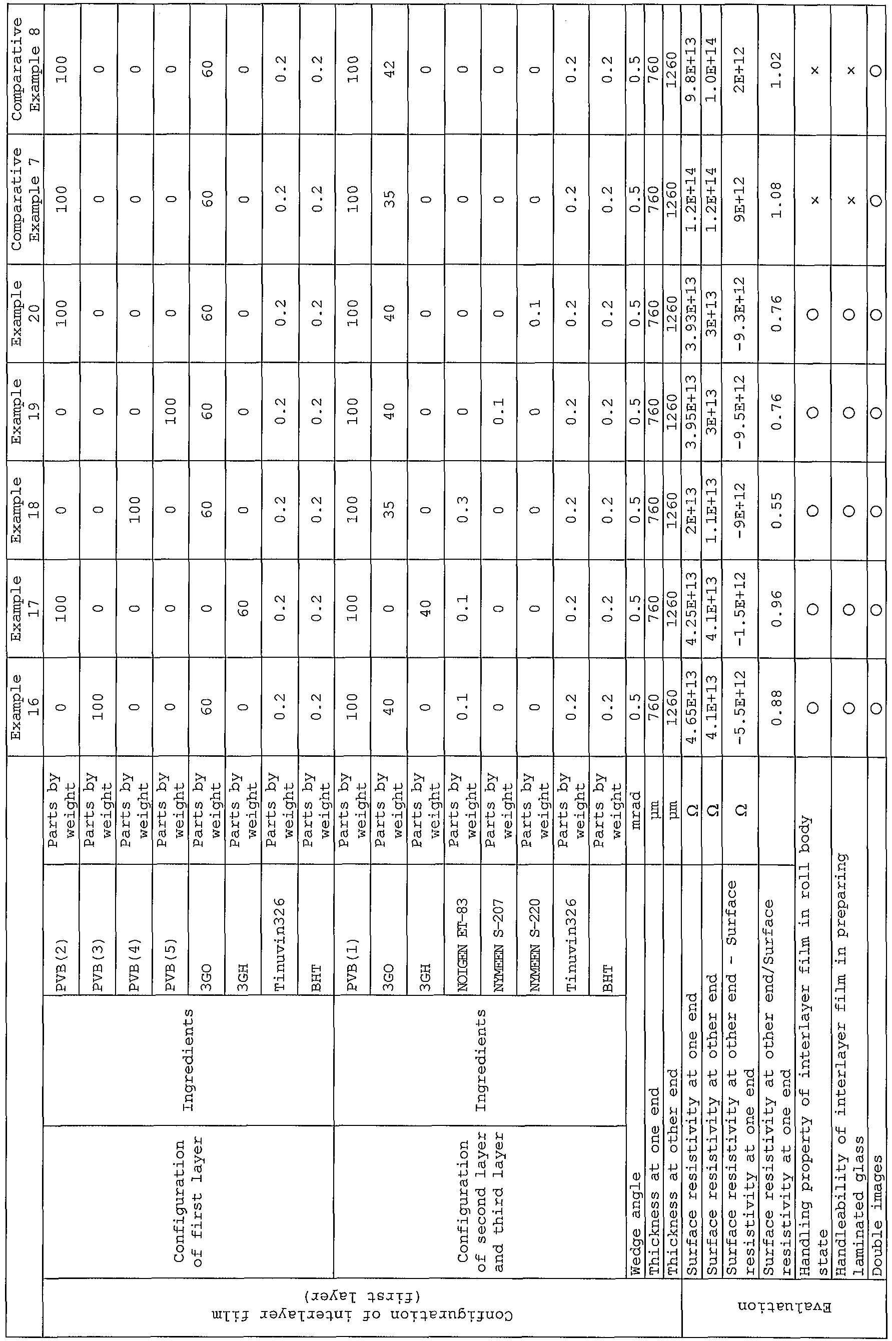

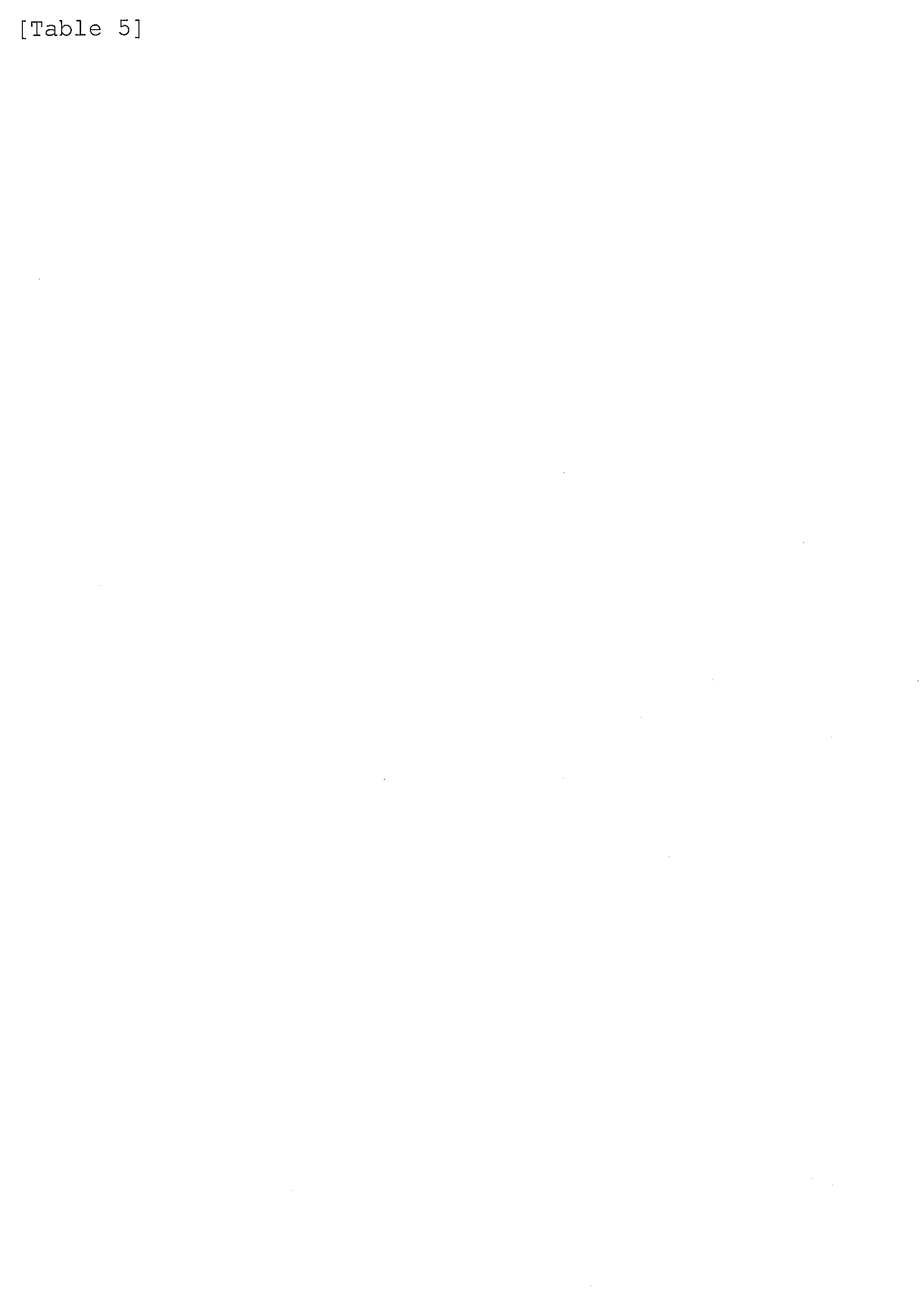

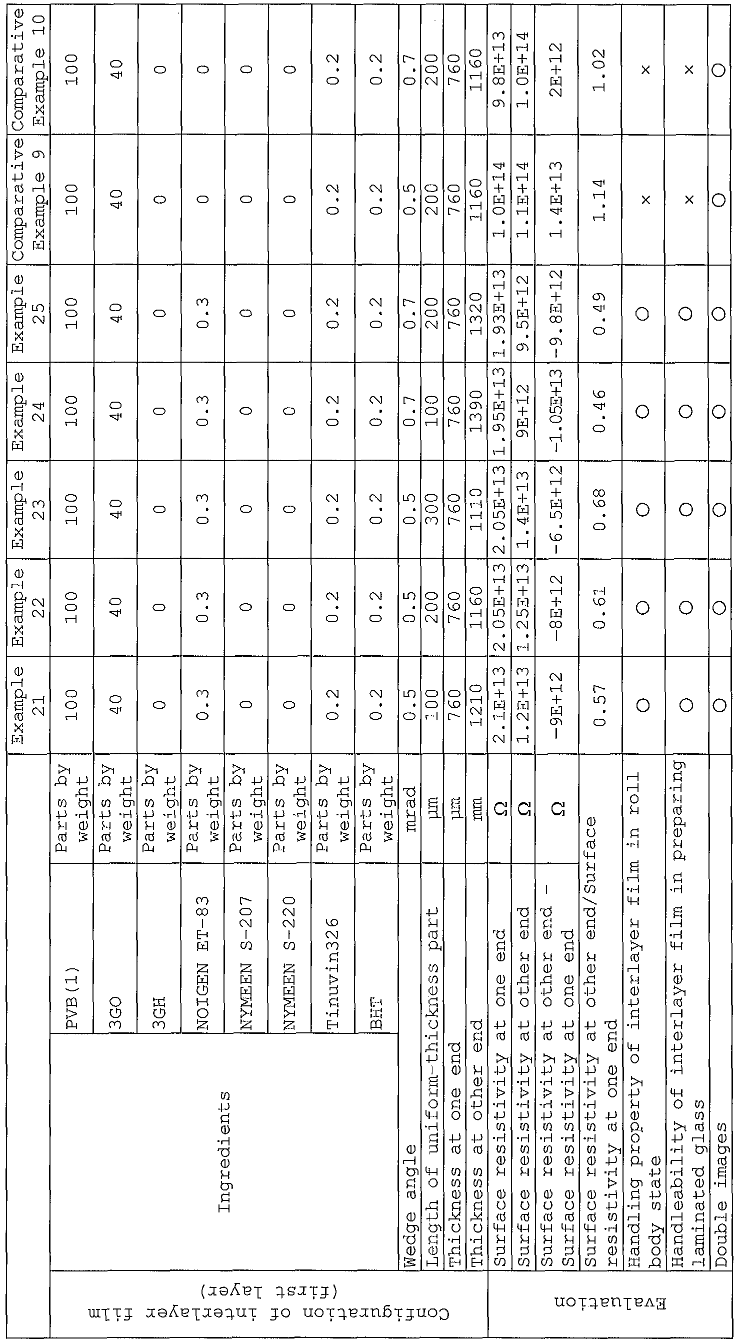

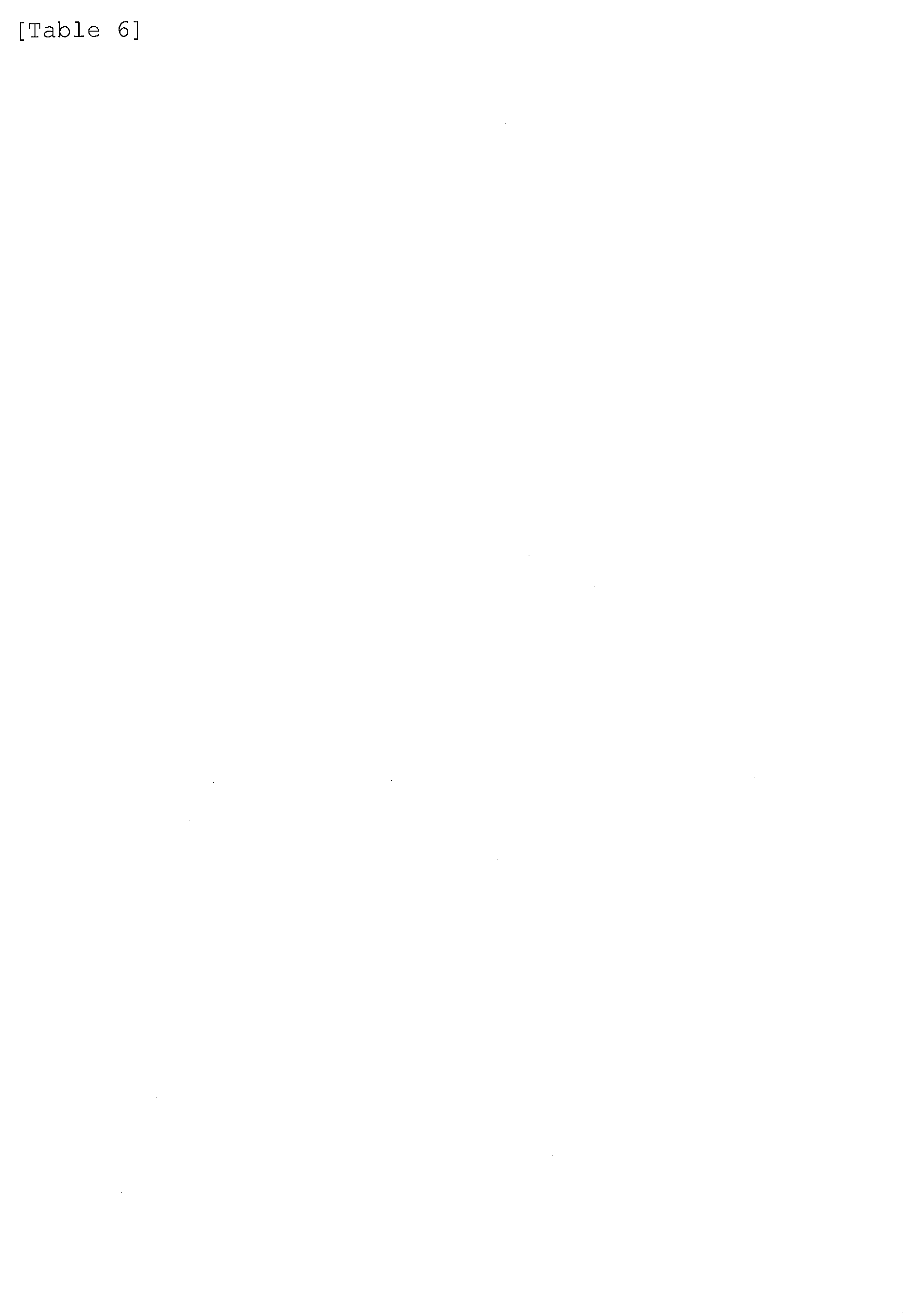

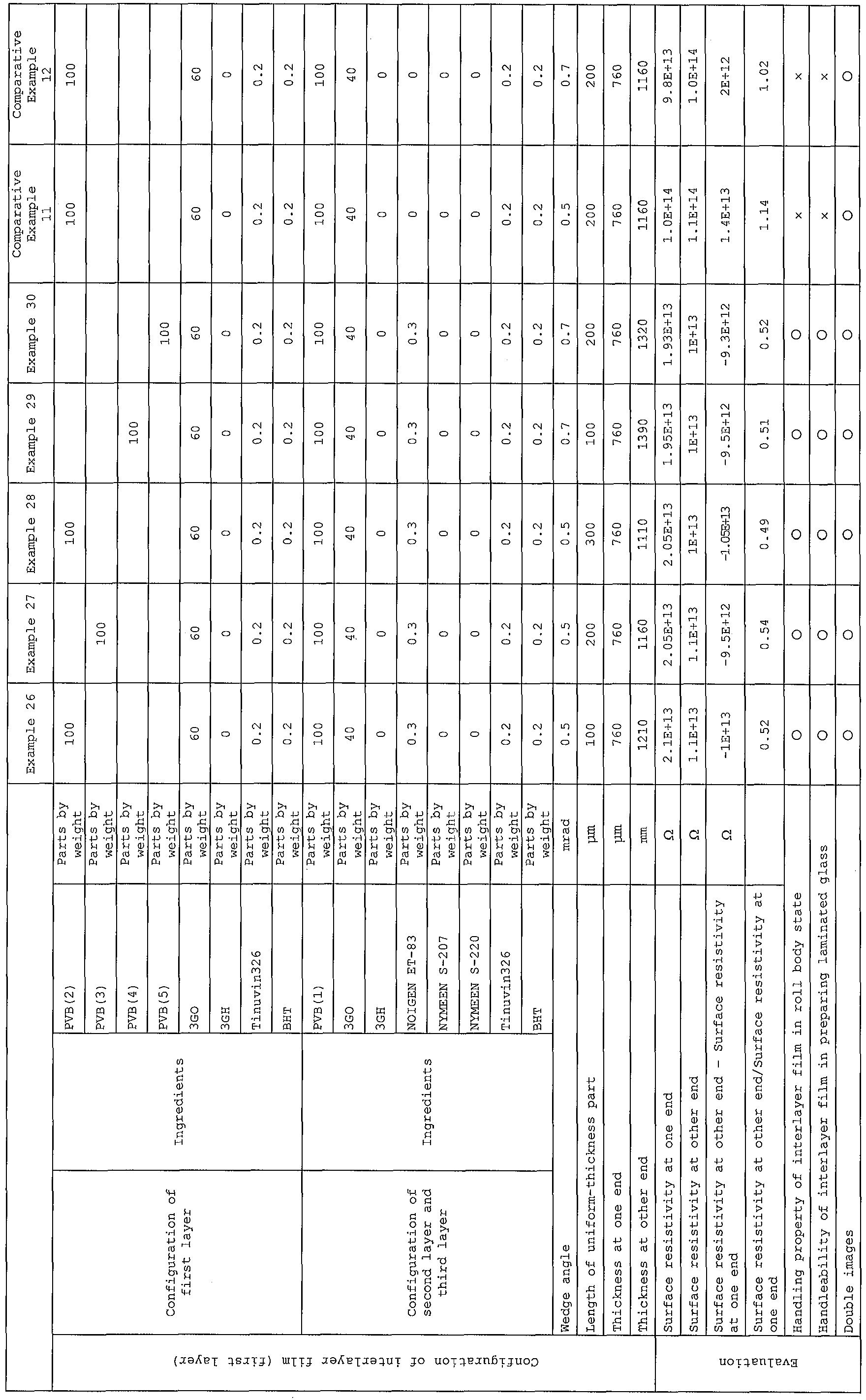

### EXPLANATION OF SYMBOLS

1, 1A: First layer
1Aa: Portion having sectional shape in thickness direction of rectangular shape
1Ab: Portion having sectional shape in thickness direction of wedge-like shape
2: Second layer
3: Third layer
11, 11A: Interlayer film
11a: One end
11b: Other end
11Aa: Portion having sectional shape in thickness direction of rectangular shape
11Ab: Portion having sectional shape in thickness direction of wedge-like shape
21: Laminated glass
22: First lamination glass member
23: Second lamination glass member
51: Roll body
61: Winding core
R1: Region for display
R2: Peripheral region
R3: Shading region

## Claims

1. An interlayer film for laminated glass, containing:
a thermoplastic resin,
the interlayer film for laminated glass having one end and other end on an opposite side of the one end, the other end having a thickness larger than a thickness of the one end,
a surface resistivity at the one end of the interlayer film after standing being 9.5×10¹³Ω or less when the interlayer film has been left to stand for 7 days at 10°C and relative humidity of 50%, a surface resistivity at the other end of the interlayer film after standing being smaller than the surface resistivity at the one end of the interlayer film after standing,
the surface resistivity being measured according to the method in the description in accordance with JIS K 6911:1995,
wherein the interlayer film has a one-layer structure or a two or more-layer structure,
and when the interlayer film has a one-layer structure composed only of a first layer, the first layer comprises an antistatic agent,
and when the interlayer film has a two or more-layer structure, the surface layers comprise an antistatic agent, and
wherein the antistatic agent consists of polyoxyethylene monoalkyl ether,
wherein the content of the antistatic agent is 0.05 wt.-% or more and 0.8 wt.-% or less in 100% by weight of the interlayer film or in 100% by weight of the layer containing the antistatic agent.

2. The interlayer film for laminated glass according to claim 1, wherein a ratio of the thickness of the interlayer film at the other end to the thickness of the interlayer film at the one end is 1.2 or more.

3. The interlayer film for laminated glass according to claim 1 or 2, having a portion with a sectional shape in a thickness direction of a wedge-like shape.

4. The interlayer film for laminated glass according to any one of claims 1 to 3, containing a plasticizer.

5. The interlayer film for laminated glass according to any one of claims 1 to 4, comprising:
a first layer; and
a second layer arranged on a first surface side of the first layer.

6. The interlayer film for laminated glass according to claim 5, wherein
the thermoplastic resin in the first layer is a polyvinyl acetal resin,
the thermoplastic resin in the second layer is a polyvinyl acetal resin, and
a content of hydroxyl group of the polyvinyl acetal resin in the first layer is lower than a content of hydroxyl group of the polyvinyl acetal resin in the second layer.

7. The interlayer film for laminated glass according to claim 5 or 6, wherein
the thermoplastic resin in the first layer is a polyvinyl acetal resin,
the thermoplastic resin in the second layer is a polyvinyl acetal resin,
the first layer contains a plasticizer,
the second layer contains a plasticizer, and
a content of the plasticizer in the first layer relative to 100 parts by weight of the polyvinyl acetal resin in the first layer is larger than a content of the plasticizer in the second layer relative to 100 parts by weight of the polyvinyl acetal resin in the second layer.

8. The interlayer film for laminated glass according to any one of claims 5 to 7, comprising: a third layer arranged on a second surface side opposite to the first surface side of the first layer.

9. The interlayer film for laminated glass according to any one of claims 1 to 8, that is an interlayer film used for laminated glass serving as a head-up display.

10. A roll body, comprising:
a winding core; and
the interlayer film for laminated glass according to any one of claims 1 to 9,
the interlayer film for laminated glass being wound around an outer periphery of the winding core.

11. A laminated glass, comprising:
a first lamination glass member;
a second lamination glass member; and
the interlayer film for laminated glass according to any one of claims 1 to 9,
the interlayer film for laminated glass being arranged between the first lamination glass member and the second lamination glass member.

## Patentansprüche

1. Zwischenschichtfolie für Verbundglas, enthaltend:
ein thermoplastisches Harz,
wobei die Zwischenschichtfolie für Verbundglas ein Ende und ein anderes Ende auf einer dem einen Ende gegenüberliegenden Seite aufweist, wobei das andere Ende eine Dicke aufweist, die größer ist als die Dicke des einen Endes,
wobei der Oberflächenwiderstand an dem einen Ende der Zwischenschichtfolie nach dem Stehenlassen 9,5 × 10¹³ Ω oder weniger beträgt, wenn die Zwischenschichtfolie 7 Tage lang bei 10°C und einer relativen Luftfeuchtigkeit von 50% stehen gelassen wurde, wobei der Oberflächenwiderstand an dem anderen Ende der Zwischenschichtfolie nach dem Stehenlassen kleiner ist als der Oberflächenwiderstand an dem einen Ende der Zwischenschichtfolie nach dem Stehenlassen,
wobei der Oberflächenwiderstand gemäß dem in der Beschreibung angegebenen Verfahren nach JIS K 6911:1995 gemessen wird,
wobei die Zwischenschichtfolie eine einschichtige Struktur oder eine zwei- oder mehrschichtige Struktur aufweist,
und wenn die Zwischenschichtfolie eine einschichtige Struktur aufweist, die nur aus einer ersten Schicht besteht, die erste Schicht ein Antistatikum umfasst,
und wenn die Zwischenschichtfolie eine zwei- oder mehrschichtige Struktur aufweist, die Oberflächenschichten ein Antistatikum umfassen, und
wobei das Antistatikum aus Polyoxyethylenmonoalkylether besteht,
wobei der Gehalt des Antistatikums 0,05 Gew.-% oder mehr und 0,8 Gew.-% oder weniger in 100 Gew.-% der Zwischenschichtfolie oder in 100 Gew.-% der das Antistatikum enthaltenden Schicht beträgt.

2. Zwischenschichtfolie für Verbundglas gemäß Anspruch 1, wobei das Verhältnis der Dicke der Zwischenschichtfolie an dem anderen Ende zur Dicke der Zwischenschichtfolie an dem einen Ende 1,2 oder mehr beträgt.

3. Zwischenschichtfolie für Verbundglas gemäß Anspruch 1 oder 2, die einen Abschnitt mit einer keilförmigen Querschnittsform in Dickenrichtung aufweist.

4. Zwischenschichtfolie für Verbundglas gemäß einem der Ansprüche 1 bis 3, die einen Weichmacher enthält.

5. Zwischenschichtfolie für Verbundglas gemäß einem der Ansprüche 1 bis 4, umfassend:
eine erste Schicht; und
eine zweite Schicht, die auf einer ersten Oberflächenseite der ersten Schicht angeordnet ist.

6. Zwischenschichtfolie für Verbundglas gemäß Anspruch 5, wobei
das thermoplastische Harz in der ersten Schicht ein Polyvinylacetalharz ist,
das thermoplastische Harz in der zweiten Schicht ein Polyvinylacetalharz ist und
der Gehalt an Hydroxylgruppen des Polyvinylacetalharzes in der ersten Schicht geringer ist als der Gehalt an Hydroxylgruppen des Polyvinylacetalharzes in der zweiten Schicht.

7. Zwischenschichtfolie für Verbundglas gemäß Anspruch 5 oder 6, wobei
das thermoplastische Harz in der ersten Schicht ein Polyvinylacetalharz ist,
das thermoplastische Harz in der zweiten Schicht ein Polyvinylacetalharz ist,
die erste Schicht einen Weichmacher enthält,
die zweite Schicht einen Weichmacher enthält und
der Gehalt des Weichmachers in der ersten Schicht, bezogen auf 100 Gewichtsteile des Polyvinylacetalharzes in der ersten Schicht, größer ist als der Gehalt des Weichmachers in der zweiten Schicht, bezogen auf 100 Gewichtsteile des Polyvinylacetalharzes in der zweiten Schicht.

8. Zwischenschichtfolie für Verbundglas gemäß einem der Ansprüche 5 bis 7, umfassend: eine dritte Schicht, die auf einer zweiten Oberflächenseite gegenüber der ersten Oberflächenseite der ersten Schicht angeordnet ist.

9. Zwischenschichtfolie für Verbundglas gemäß einem der Ansprüche 1 bis 8, die eine Zwischenschichtfolie ist, die für Verbundglas verwendet wird, das als Head-up-Display dient.

10. Walzenkörper, umfassend:
einen Wickelkern; und
die Zwischenschichtfolie für Verbundglas gemäß einem der Ansprüche 1 bis 9,
wobei die Zwischenschichtfolie für Verbundglas um einen äußeren Umfang des Wickelkerns gewickelt ist.

11. Verbundglas, umfassend:
ein erstes Verbundglaselement;
ein zweites Verbundglaselement; und
die Zwischenschichtfolie für Verbundglas gemäß einem der Ansprüche 1 bis 9,
wobei die Zwischenschichtfolie für Verbundglas zwischen dem ersten Verbundglaselement und dem zweiten Verbundglaselement angeordnet ist.

## Revendications

1. Film intercouche pour verre feuilleté, contenant :
une résine thermoplastique,
le film intercouche pour verre feuilleté ayant une première extrémité et une seconde extrémité sur un côté opposé de la première extrémité, la seconde extrémité ayant une épaisseur supérieure à une épaisseur de la première extrémité,
une résistivité superficielle à la première extrémité du film intercouche après repos étant de 9,5 × 10¹³ Ω ou moins lorsque le film intercouche a été laissé au repos pendant 7 jours à 10 °C et une humidité relative de 50 %, une résistivité superficielle à la seconde extrémité du film intercouche après repos étant inférieure à la résistivité superficielle à la première extrémité du film intercouche après repos,
la résistivité superficielle étant mesurée conformément au procédé décrit dans la description conformément à la norme JIS K 6911:1995,
dans lequel le film intercouche a une structure à une couche ou une structure à deux couches ou plus,
et lorsque le film intercouche a une structure à une couche uniquement composée d'une première couche, la première couche comporte un agent antistatique,
et lorsque le film intercouche a une structure à deux couches ou plus, les couches de surface comportent un agent antistatique, et
dans lequel l'agent antistatique est constitué d'éther de monoalkyle de polyoxyéthylène,
dans lequel la teneur en agent antistatique est de 0,05 % en poids ou plus et de 0,8 % en poids ou moins dans 100 % en poids du film intercouche ou dans 100 % en poids de la couche contenant l'agent antistatique.

2. Film intercouche pour verre feuilleté selon la revendication 1, dans lequel un rapport de l'épaisseur du film intercouche à la seconde extrémité sur l'épaisseur du film intercouche à la première extrémité est de 1,2 ou plus.

3. Film intercouche pour verre feuilleté selon la revendication 1 ou 2, ayant une partie avec une forme de section dans une direction d'épaisseur d'une forme analogue à un coin.

4. Film intercouche pour verre feuilleté selon l'une quelconque des revendications 1 à 3, contenant un plastifiant.

5. Film intercouche pour verre feuilleté selon l'une quelconque des revendications 1 à 4, comportant :
une première couche ; et
une deuxième couche disposée sur un premier côté de surface de la première couche.

6. Film intercouche pour verre feuilleté selon la revendication 5, dans lequel
la résine thermoplastique dans la première couche est une résine de polyacétal de vinyle,
la résine thermoplastique dans la deuxième couche est une résine de polyacétal de vinyle, et
une teneur en groupe hydroxyle de la résine de polyacétal de vinyle dans la première couche est inférieure à une teneur en groupe hydroxyle de la résine de polyacétal de vinyle dans la deuxième couche.

7. Film intercouche pour verre feuilleté selon la revendication 5 ou 6, dans lequel
la résine thermoplastique dans la première couche est une résine de polyacétal de vinyle,
la résine thermoplastique dans la deuxième couche est une résine de polyacétal de vinyle,
la première couche contient un plastifiant,
la deuxième couche contient un plastifiant, et
une teneur en plastifiant dans la première couche par rapport à 100 parties en poids de la résine de polyacétal de vinyle dans la première couche est supérieure à une teneur en plastifiant dans la deuxième couche par rapport à 100 parties en poids de la résine de polyacétal de vinyle dans la deuxième couche.

8. Film intercouche pour verre feuilleté selon l'une quelconque des revendications 5 à 7, comportant : une troisième couche disposée sur un second côté de surface opposé au premier côté de surface de la première couche,

9. Film intercouche pour verre feuilleté selon l'une quelconque des revendications 1 à 8, qui est un film intercouche utilisé pour verre feuilleté servant d'affichage tête haute.

10. Corps de rouleau comportant :
un mandrin d'enroulement ; et
le film intercouche pour verre feuilleté selon l'une quelconque des revendications 1 à 9,
le film intercouche pour verre feuilleté étant enroulé autour d'une périphérie extérieure du mandrin d'enroulement.

11. Verre feuilleté, comportant :
un premier élément de verre de feuilletage ;
un second élément de verre de feuilletage ; et
le film intercouche pour verre feuilleté selon l'une quelconque des revendications 1 à 9,
le film intercouche pour verre feuilleté étant disposé entre le premier élément de verre de feuilletage et le second élément de verre de feuilletage.
